# EUROPEAN PATENT APPLICATION

(11) **EP 4 660 913 A1**
(43) Date of publication of application: **10.12.2025**
(21) Application number: 25713805.7
(22) Date of filing: 06.03.2025
(51) Int. Cl.: G06Q 10/20, G06Q 30/01, G06F 11/22, G06F 11/32, G06F 11/30

(54) **ELECTRONIC DEVICE, AND METHOD BY WHICH ELECTRONIC DEVICE PROVIDES COMPONENT REPLACEMENT HISTORY INFORMATION**

(30) Priority: 17.04.2024 KR 20240051599; 30.05.2024 KR 20240070614
(71) Applicant: Samsung Electronics Co., Ltd., Suwon-si, Gyeonggi-do 16677 (KR)
(72) Inventor: KIM, Byungchul, Suwon-si, Gyeonggi-do 16677 (KR); YUN, Jongbin, Suwon-si, Gyeonggi-do 16677 (KR); LEE, Kwangsoo, Suwon-si, Gyeonggi-do 16677 (KR); LEE, Sanghyun, Suwon-si, Gyeonggi-do 16677 (KR); CHO, Jinhoon, Suwon-si, Gyeonggi-do 16677 (KR)
(74) Representative: Appleyard Lees IP LLP
(86) International application number: PCT/KR2025/099588
(87) International publication number: WO 2025/221128

(57) **Abstract**

According to an embodiment, an electronic device may comprise communication circuitry, a display, memory storing instructions, and at least one processor. The instructions may, when executed by the at least one processor individually or collectively, enable the electronic device to: obtain part identification information about a part included in the electronic device based on completion of booting of the electronic device, identify whether the part is a replaced part based on whether the part identification information is stored in a designated storage area of the memory, based on identifying that the part is the replaced part, transmit, through the communication circuitry to an external electronic device, information about the electronic device including the part identification information, electronic device identification information about the electronic device, and memory identification information about the memory, receive authenticity information about the part in response to the transmission of the information about the electronic device and store the authenticity information about the part in the designated storage area of the memory, and based on a designated event, display, on the display, part replacement history information including the authenticity information about the part. Other embodiments are possible as well.

## Description

### [Technical Field]

Various embodiments of the disclosure relate to a method for providing part replacement history information in an electronic device.

### [Background Art]

Advancing information communication and semiconductor technologies accelerate the spread and use of various electronic devices. Electronic devices are being developed to carry out communication while carried on by the user.

Electronic device may mean a device that performs various functions according to an equipped program, such as mobile communication terminals, tablet PCs, smartphones, wearable electronic devices, video/audio devices, desktop/laptop computers, or vehicle navigation devices.

An electronic device may include various parts to perform various functions, and each of the parts of the electronic device is replaceable.

### [Disclosure of Disclosure]

### [Solution to Problems]

An electronic device may include replaceable parts, such as a display, a camera, a battery, a sensor, and/or a processor, and the user may replace a replaceable part of the electronic device with another part that performs the same or similar function. For example, the user may replace the part of the electronic device with another part by himself or by leaving the electronic device to a repair shop for various reasons for part replacement, such as when the part of the electronic device is broken, damaged, or needs to be upgraded.

The manufacturer of the electronic device recommends replacing the part of the electronic device with a certified genuine part, but the user may arbitrarily use an uncertified, unknown part when replacing the part of the electronic device or may use an uncertified, unknown part unintentionally, e.g., by a repair shop. Replacing a part of an electronic device with an unknown one may result in deterioration of the quality and performance of the electronic device, and the user may not be able to recognize whether a part of an electronic device is replaced with a genuine or unknown one. Therefore, when a part of an electronic device is replaced, it is necessary to provide the user with information about whether the replaced part is genuine or unknown.

According to an embodiment of the disclosure, it is possible to lead the user to use genuine parts while increasing the reliability of a replaced part by recording information about whether a part replaced in an electronic device is genuine or unknown and providing part replacement history information to the user.

An electronic device according to an embodiment of the disclosure may comprise communication circuitry, a display, memory storing instructions, and at least one processor. The instructions may, when executed by the at least one processor individually or collectively, enable the electronic device to obtain part identification information about a part included in the electronic device based on completion of booting of the electronic device. The instructions may, when executed by the at least one processor individually or collectively, enable the electronic device to identify whether the part is a replaced part based on whether the part identification information is stored in a designated storage area of the memory. The instructions may, when executed by the at least one processor individually or collectively, enable the electronic device to, based on identifying that the part is the replaced part, transmit, through the communication circuitry to an external electronic device, information about the electronic device including the part identification information, electronic device identification information about the electronic device, and memory identification information about the memory. The instructions may, when executed by the at least one processor individually or collectively, enable the electronic device to receive authenticity information about the part in response to the transmission of the information about the electronic device and store the authenticity information about the part in the designated storage area of the memory. The instructions may, when executed by the at least one processor individually or collectively, enable the electronic device to, based on a designated event, display, on the display, part replacement history information including the authenticity information about the part.

An electronic device according to the disclosure may comprise communication circuitry, memory storing instructions, and at least one processor. The instructions may, when executed by the at least one processor individually or collectively, enable the electronic device to receive, through the communication circuitry from an external electronic device, information about the external electronic device including part identification information about a part included in the external electronic device, external electronic device identification information, and memory identification information about memory included in the external electronic device. The instructions may, when executed by the at least one processor individually or collectively, enable the electronic device to identify whether the part is genuine or unknown using the information about the external electronic device. The instructions may, when executed by the at least one processor individually or collectively, enable the electronic device to transmit, through the communication circuitry to the external electronic device, authenticity information about the part indicating whether the part is genuine or unknown.

A method for providing replacement history information about a part in an electronic device, according to an embodiment of the disclosure, may comprise obtaining part identification information about a part included in the electronic device based on completion of booting of the electronic device. The method may comprise identifying whether the part is a replaced part based on whether the part identification information is stored in a designated storage area of memory. The method may comprise, based on identifying that the part is the replaced part, transmitting, through communication circuitry to an external electronic device, information about the electronic device including the part identification information, electronic device identification information about the electronic device, and memory identification information about the memory. The method may comprise receiving authenticity information about the part from the external electronic device in response to the transmission of the information about the electronic device and storing the authenticity information about the part in the designated storage area. The method may comprise, based on a designated event, displaying, on a display, part replacement history information including the authenticity information about the part.

A method for providing authenticity information about a part in an electronic device, according to an embodiment of the disclosure, may comprise receiving, through communication circuitry from an external electronic device, information about the external electronic device including part identification information about a part included in the external electronic device, external electronic device identification information about the external electronic device, and memory identification information about memory included in the external electronic device. The method may comprise identifying whether the part is genuine or unknown using the information about the external electronic device. The method may comprise transmitting, through the communication circuitry to the external electronic device, the authenticity information about the part including information indicating that the part is genuine or information indicating that the part is unknown.

### [Brief Description of Drawings]

FIG. 1 is a block diagram illustrating an electronic device in a network environment according to an embodiment;
FIG. 2 is a block diagram illustrating an electronic device according to an embodiment.
FIG. 3 is a flowchart illustrating an operation of providing part replacement history information according to an embodiment;
FIG. 4 is a flowchart illustrating an operation of registering information about an electronic device or providing part replacement history information based on whether booting is the initial booting in the electronic device according to an embodiment;
FIG. 5 is a flowchart illustrating an operation of displaying part replacement history information according to an embodiment;
FIG. 6A is a view illustrating a part replacement history screen according to an embodiment;
FIG. 6B is a view illustrating a part replacement history popup window according to an embodiment;
FIG. 7 is a block diagram illustrating a server according to an embodiment;
FIG. 8 is a flowchart illustrating an operation of providing authenticity information about a replaced part in a server according to an embodiment;
FIG. 9 is a flowchart illustrating an operation of registering information about an electronic device or providing information about whether a replaced part is genuine based on whether there is information about a pre-registered electronic device in a server according to an embodiment;
FIG. 10 is a flowchart illustrating an operation of identifying information about whether a replaced part is genuine according to an embodiment;
FIG. 11A is a view illustrating an operation of transmitting a display part ID of a replaced display to a server in an electronic device when replacing a display part in the electronic device according to an embodiment;
FIG. 11B is a view illustrating an operation of providing authenticity information about a replaced display to an electronic device in a server according to an embodiment;
FIG. 12 is a view illustrating operations of a server and an electronic device when modifying a result of genuine part certification for each part according to an embodiment;
FIG. 13A is a view illustrating menu selection on a part replacement history screen according to an embodiment;
FIG. 13B is a view illustrating an example of displaying 'contact us' as a menu associated with a part replacement history on a part replacement history screen according to an embodiment; and
FIG. 13C is a view illustrating an example of displaying 'contact us' and 'refresh' as a menu associated with a part replacement history on a part replacement history screen according to an embodiment.
FIG. 14A is a view illustrating an operation of storing, in memory, electronic device information when network connection is impossible or no response is received from an external electronic device upon initial booting in an electronic device according to an embodiment.
FIG. 14B is a view illustrating an operation of transmitting, to a server, electronic device information stored in memory when network connection is possible in an electronic device and reception of a response from an external electronic device is possible according to an embodiment.
FIG. 15A is a view illustrating an operation of storing, in memory, electronic device information when network connection is impossible or no response is received from an external electronic device upon booting after part replacement in an electronic device according to an embodiment.
FIG. 15B is a view illustrating an operation of transmitting, to a server, updated electronic device information when network connection is possible in an electronic device and reception of a response from an external electronic device is possible according to an embodiment.

### [Mode for the Disclosure]

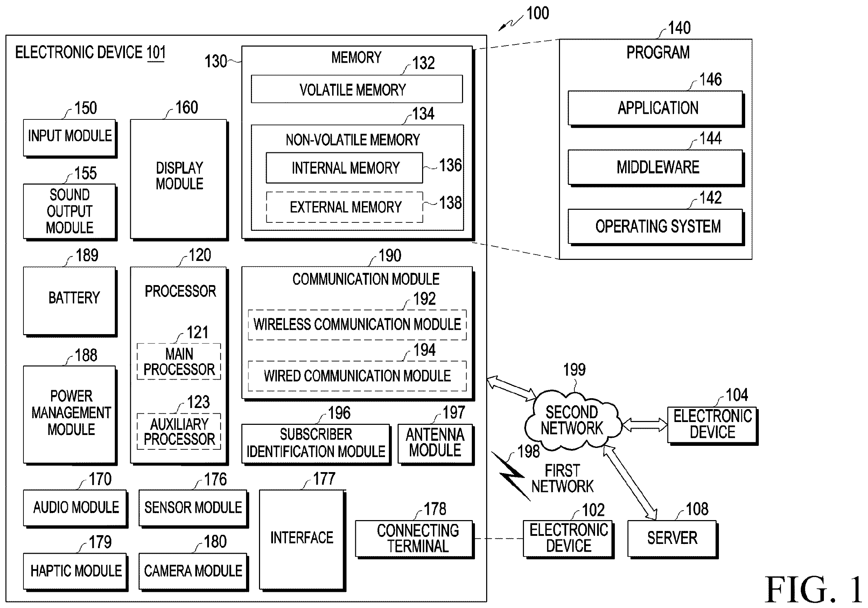

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least component of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or certify the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other components (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, the components easy to understand from the description of the above embodiments are denoted with or without the same reference numerals and their detailed description may be skipped. According to an embodiment of the disclosure, an electronic device may be implemented by selectively combining configurations of different embodiments, and the configuration of one embodiment may be replaced by the configuration of another embodiment. However, it is noted that the disclosure is not limited to a specific drawing or embodiment.

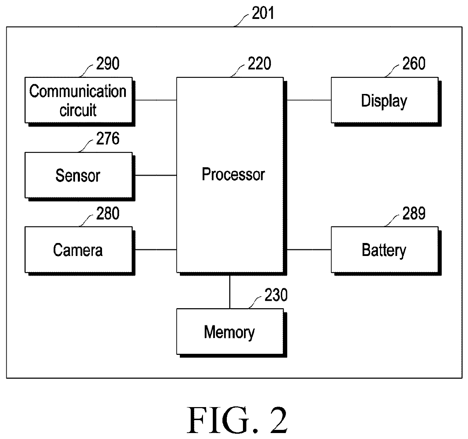

FIG. 2 is a block diagram illustrating an electronic device according to an embodiment.

Referring to FIG. 2, an electronic device 201 (e.g., the electronic device 101 of FIG. 1) according to an embodiment includes a processor 220, memory 230, a display 260, a sensor 276, a camera 280, a battery 289, and/or communication circuitry 290. Each of the processor 220, the memory 230, the display 260, the sensor 276, the camera 280, the battery 289, and/or the communication circuitry 290 according to an embodiment are a part of the electronic device 201, and all or some thereof may be replaced with other parts having the same or similar function. The electronic device 201 according to an embodiment is not limited thereto, and may further include various parts or omit some of the parts. According to an embodiment, the electronic device 201 may include the whole or part of the electronic device 101 of FIG. 1.

The processor 220 (e.g., the processor 120 of FIG. 1) according to an embodiment includes a central processing unit (CPU) (e.g., an application processor (AP)) and/or a graphic processing unit (GPU). The processor 220 according to an embodiment is operable to perform an overall control operation of the electronic device 201 and is operable to provide part replacement history information of the disclosure. The processor 220 according to an embodiment is operable to execute (or call) a service agent (e.g., a service agent application or a service agent program) stored in the memory 230 during booting and is operable to communicate with an external electronic device (e.g., the server 108 or 708) (e.g., a part replacement history (PRH) server) through the service agent to provide part replacement history information.

The processor 220 according to an embodiment is operable to obtain (or identify) part identification information (e.g., a part ID) about the part included in the electronic device 201 based on booting completion. The processor 220 according to an embodiment is operable to identify at least one part designated to be replaceable among the parts included in the electronic device 201, and is operable to obtain at least one piece of part identification information corresponding to each of the at least one part using a device driver corresponding to the at least one part. The part of the electronic device 201 according to an embodiment may be a piece of hardware, and the device driver may be a program for connecting an application program and a part in an operating system of the electronic device 201.

The processor 220 according to an embodiment is operable to identify whether the part corresponding to the part identification information is a replaced part, based on whether the part identification information is stored in a designated area of the memory 230. The processor 220 according to an embodiment is operable to identify whether the part corresponding to the part identification information is a replaced part, based on whether the part identification information obtained based on booting completion is included in the information about the electronic device (or a file including the information about the electronic device) stored in the designated area of the memory 230. The processor 220 according to an embodiment is operable to compare the obtained part identification information with at least one piece of part identification information included in the information about the electronic device stored in the designated storage area. When the same part identification information as the obtained part identification information does not exist in the information about the electronic device, the processor 220 according to an embodiment is operable to identify that the part corresponding to the obtained part identification information is a replaced part. When the same part identification information as the obtained part identification information exists in the information about the electronic device stored in the designated storage area, the processor 220 according to an embodiment is operable to identify that the part corresponding to the obtained part identification information is a part that has not been replaced. The designated area of the memory 230 according to an embodiment may be a designated storage area (e.g., persistent partition) of the storage area of the memory 230 so that the stored data is not deleted even during a factory reset in which the electronic device 201 is initialized, such as a state immediately after factory shipment. For example, the designated storage area may be a part replacement history information storage area. The information about the electronic device according to an embodiment includes at least one piece of part identification information corresponding to at least one part included in the electronic device 201, electronic device identification information, and memory identification information. For example, the at least one piece of part identification information may include at least one unique part ID of each of at least one replaceable part present in the electronic device 201. For example, the electronic device identification information may include a serial number (S/N), which is a unique number of the electronic device 201. For example, the memory identification information may include a unique number (U/N) (e.g., a unique number of a universal flash storage (UFS) or a unique number of an embedded multimedia card (eMMC)) that is a unique number of a storage included in the memory 230.

The unique number of the electronic device 201 according to an embodiment may be a serial number corresponding to a board (or a main board or a printed circuit board assembly (PBA)) included in the electronic device 201. When the main board of the electronic device 201 according to an embodiment is replaced, the processor 220 is operable to identify each of the serial number before the main board is replaced and the serial number after the main board is replaced. When the main board of the electronic device 201 according to an embodiment is replaced, the processor 220 is operable to obtain the serial number before replacement from the external service tool. When the storage according to an embodiment is included in the board (or main board or PBA) of the electronic device 201, the unique number, which is the unique number of the storage, may also be different between the unique number before replacement and the unique number after replacement based on the replacement of the board (or main board or PBA).

The electronic device 201 according to an embodiment is operable to store information about the electronic device in the designated area of the memory 230 upon factory shipment, or is operable to store information about the electronic device upon completion of initial booting (e.g., initial booting after factory shipment or initial booting after activation for registration of use of the electronic device 201). The electronic device 201 according to an embodiment is operable to further store a serial number before board replacement as information about the electronic device when the board (or main board or PBA) of the electronic device 201 is replaced.

When booting is completed, the processor 220 according to an embodiment is operable to identify initial booting when information about the electronic device is not stored in the designated area of the memory 230. The processor 220 according to an embodiment is operable to obtain at least one piece of part identification information corresponding to each of at least one part designated to be replaceable upon initial booting completion, is operable to obtain information about the electronic device including the at least one piece of part identification information, the electronic device identification information, and the memory identification information, is operable to transmit (or transmit and register (e.g., first terminal registration)) the information to an external electronic device (e.g., the server 108 or the part replacement history management server) so as to be registered (e.g., first terminal registration), and is operable to store the information about the electronic device in the designated area of the memory 230 based on an information registration response of the electronic device from the external electronic device. When booting is performed after the board (or main board or PBA) is replaced, the processor 220 according to an embodiment is operable to include the serial number before replacement and the serial number after replacement in the information about the electronic device and transmit the information. When the processor 220 according to an embodiment transmits, to the server 708, information about the electronic device including the serial number before replacement and the serial number after replacement, the processor 220 is operable to receive, from the server 708, information about whether the pre-replaced part is genuine in response to the serial number before replacement.

Table 1 below shows an example of electronic device information stored in the designated area of the memory 230.

**[Table 1]**

| Items | | Value |
|---|---|---|
| Serial number | | RRRRRRRRRRA |
| Unique number | | CC0000000000B000E |
| Model | | SM-XXXX |
| Customer Code | | VZW |
| Type | | First terminal registration |
| Part List | front camera module ID | BVQIE15E6210A01 |
| | front camera sensor ID | B2110A1N0010D989A101100334CB000 1 |
| | front camera2 module ID | - |
| | front camera2 sensor ID | - |
| | rear camera module ID | SVQID0EA4000914 |
| | rear camera sensor ID | 020F080A0012CEC2B100F031B720111 |
| | rear camera2 module ID | NVQHJ0ACA215F01 |
| | rear camera2 sensor ID | 2C60564D741213736191001000000000 |
| | rear camera3 module ID | MVQID052E02E203 |
| | rear camera3 sensor ID | 3400754D77020498C101003001010200 |
| | rear camera4 module ID | YCQIM1DAECD2802 |
| | rear camera4 sensor ID | 2C60854A07180850C1010020000000000 |
| | upper camera module ID | - |
| | upper camera sensor ID | - |
| | display cell ID | c91704291521bc0bf30c8f |
| | display chip ID | 4010f3A3FN1D37207AN043 |
| | display2 cell ID | - |
| | display2 chip ID | - |
| | battery ID | GH3-05192B+AABWA02KD+05419KS N00 |
| | AP ID | 00000448218BDA61 |
| Change List | | |
| ...... | | |

Referring to Table 1, the processor 220 according to an embodiment is operable to store values corresponding to electronic device identification information (serial number), memory identification information (unique number), and part identification information (part ID) about each part of the part list in the designated area of the memory 230. The electronic device 201 according to an embodiment includes a plurality of replaceable parts. Table 1 shows an example in which the plurality of replaceable parts include a front camera module, a front camera sensor, a front camera2 module, a front camera2 sensor, a rear camera module, a rear camera sensor, a rear camera2 module, a rear camera2 sensor, a rear camera3 module, a rear camera3 sensor, a rear camera4 module, a rear camera4 sensor, an upper camera module, an upper camera sensor, a display cell, a display chip, a display2 cell, a display2 chip, a battery, and an AP, and the electronic device 201 includes, among the replaceable parts, the front camera module, the front camera sensor, the rear camera module, the rear camera sensor, the rear camera2 module, the rear camera2 sensor, the rear camera3 module, the rear camera3 sensor, the rear camera4 module, the rear camera4 sensor, the display cell, the display chip, the battery, and the AP, but the replaceable parts of the electronic device 201 may omit some of the parts or add more parts. The electronic device 201 may have different replaceable parts for each model. For example, when the electronic device 201 is a model including a flexible display, a motor for driving the flexible display in an extended or shrunken state, and a motor device driver for controlling the motor, the replaceable part may further include a motor.

The processor 220 according to an embodiment is operable to store part identification information corresponding to each of the plurality of parts and a value corresponding to the part identification information in the designated area of the memory 230. The processor 220 according to an embodiment is operable to further store values respectively corresponding to the model name, the customer code, and the part identification information collection type of the electronic device 201 in addition to the electronic device identification information (serial number), the memory identification information (unique number), and the part identification information (part ID) in the designated area of the memory 230. For example, in Table 1, if the value of the part identification information collection type is first terminal registration, it may mean that the part identification information is obtained when initial booting (e.g., initial booting after factory shipment or initial booting after activation for use registration of the electronic device 201) is completed.

When booting is completed, the processor 220 according to an embodiment is operable to identify that the part corresponding to the obtained part identification information is a replaced part when the information about the electronic device is stored in the designated area of the memory 230 (or is not initially booted) and the obtained part identification information is not stored in the stored information about the electronic device. The processor 220 according to an embodiment is operable to transmit the part identification information about the replaced part to the external electronic device through the communication circuitry 290 based on the part corresponding to the part identification information being identified as the replaced part. The processor 220 according to an embodiment is operable to transmit the updated information about the electronic device including the part identification information about the replaced part to the external electronic device instead of the part identification information about the part before replacement, based on the part corresponding to the part identification information being identified as the replaced part.

The processor 220 according to an embodiment is operable to receive information about whether the replaced part is genuine from the external electronic device in response to transmitting the part identification information about the replaced part to the external electronic device. According to an embodiment, the information about whether the replaced part is genuine may include information (e.g., genuine part or genuine part) indicating that the replaced part is genuine or information (e.g., unknown) indicating that the replaced part is unknown. The genuine part according to an embodiment may mean that the replaced part is a part of a designated manufacturer or a certified part. The unknown part according to an embodiment may mean that the replaced part is not a part of a designated manufacturer or is an uncertified part.

The processor 220 according to an embodiment is operable to store the part replacement history information including the authenticity information about the replaced part in the designated area of the memory 230 based on reception of the authenticity information about the replaced part. The processor 220 according to an embodiment is operable to store information about whether the replaced part is genuine, based on receiving the information about whether the replaced part is genuine, and is operable to store information about the electronic device updated to include the ID of the replaced part.

Table 2 below shows an example of updated electronic device information stored in the designated area of the memory 230.

**[Table 2]**

| Items | | Value |
|---|---|---|
| Serial number | | RRRRRRRRRRA |
| Unique number | | CC0000000000B000E |
| Model | | SM-XXXX |
| Customer Code | | VZW |

| Type | | Part replacement |
|---|---|---|
| Part List | front camera module ID | BVQIE15E6210A01 |
| | front camera sensor ID | B2110A1N0010D989A101100334CB000 1 |
| | front camera2 module ID | - |
| | front camera2 sensor ID | - |
| | rear camera module ID | SVQID0EA4000914 |
| | rear camera sensor ID | 020F080A0012CEC2B100F031B720111 |
| | rear camera2 module ID | NVQHJ0ACA215F01 |
| | rear camera2 sensor ID | 2C60564D741213736191001000000000 |
| | rear camera3 module ID | MVQID052E02E203 |
| | rear camera3 sensor ID | 3400754D77020498C101003001010200 |
| | rear camera4 module ID | YCQIM1DAECD2802 |
| | rear camera4 sensor ID | 2C60854A07180850C1010020000000000 |
| | upper camera module ID | - |
| | upper camera sensor ID | - |
| | display cell ID | a81304291521bc0bf30c8f |
| | display chip ID | 51101f3C4EF2P47657QA157 |
| | display2 cell ID | - |
| | display2 chip ID | - |
| | battery ID | GH3-05192B+AABWA02KD+05419KS N00 |
| | AP ID | 00000448218BDA61 |
| Change List | | display cell ID, display chip ID |
| ...... | | |

Referring to Table 2, when the display is replaced, the processor 220 according to an embodiment is operable to store the updated electronic device information in the designated area of the memory 230. The updated electronic device information according to an embodiment may include a display cell ID value and a display chip ID value of the display after replacement, instead of a display cell ID value and a display chip ID value of the display before replacement. The part identification information collection type value of the updated electronic device information according to an embodiment may include part replacement. A display cell ID and a display chip ID may be included in a change list value of updated electronic device information according to an embodiment. Table 3 below is a table showing an example of information about whether a replaced part stored in the designated area of the memory 230 is genuine.

**[Table 3]**

| Part | Value |
|---|---|
| display | Genuine Samsung part |

Referring to Table 3, when the display is replaced, the processor 220 according to an embodiment is operable to store, in a designated storage area of the memory 230, information about whether the replaced part is genuine, indicating that the replaced part is the display and that the replaced part is a genuine Samsung part. The processor 220 according to an embodiment is operable to store part replacement history information including a part name of the replaced part, a replacement time (e.g., a replacement date and/or a replacement time point) of the replaced part, and information about whether the replaced part is genuine, in the designated area of the memory 230, based on reception of the information about whether the replaced part is genuine.

The processor 220 according to an embodiment is operable to display part replacement history information based on the occurrence of a designated event. The processor 220 according to an embodiment is operable to identify the occurrence of the designated event when there is a user input for requesting a designated menu or function (e.g., a part replacement history display menu or function) of the electronic device 201 or when it is identified that the replaced part is genuine or unknown. When there is the user input for requesting the designated menu or function (e.g., the part replacement history display menu or function) of the electronic device 201, the processor 220 according to an embodiment is operable to display a part replacement history information screen including part replacement history information for each of the replaced parts recorded whenever the part of the electronic device 201 is replaced. When it is identified that the replaced part is genuine or unknown, the processor 220 according to an embodiment is operable to display the part replacement history information for the replaced part in a pop-up window. When another designated event occurs, the processor 220 according to an embodiment is operable to display the part replacement history information in another display manner.

The memory 230 (e.g., the memory 130 of FIG. 1) according to an embodiment is operable to store instructions. The memory 230 according to an embodiment may include one or more storage media storing instructions. The memory 230 according to an embodiment is operable to store various data used by at least one part of the electronic device 201. The data may include, e.g., software (e.g., a software module or the program 140) and input data or output data for a command related thereto. The memory 230 according to an embodiment includes a storage area (e.g., persistent partition) designated so that stored data is not deleted even when the electronic device 201 is factory reset, such as a state immediately after factory shipment. For example, the designated storage area is a part replacement history information storage area. The memory 230 according to an embodiment is operable to store instructions (or commands) that enable the processor 220 to perform an operation (or method) of providing part replacement history information of the disclosure. The memory 230 according to an embodiment is operable to store the device driver corresponding to each part that enables the processor 220 to drive at least one part of the electronic device 201. The device driver corresponding to each part may include a part ID corresponding to each part. The memory 230 according to an embodiment includes storage including UFS or eMMC, and the UFS or the eMMC may include a designated storage area.

The display 260 (e.g., the display 160 of FIG. 1) according to an embodiment is operable to display various types of information under the control of the processor 220. The display 260 according to an embodiment is operable to display a screen associated with performing an operation (or method) of providing part replacement history information. According to an embodiment, the display 260 may be implemented as a touchscreen display. The display 260, when implemented together with an input module in the form of a touchscreen display, is operable to display various information generated according to the user's touch. The display 260 according to an embodiment may include a plurality of displays (e.g., a display, a display 2), and the plurality of displays may include display cell parts (display cell, display cell2) and display chip part (display chip, display chip2).

The sensor 276 (e.g., the sensor module 176 of FIG. 1) according to an embodiment is operable to detect an operational state (e.g., power or temperature) of the electronic device 201 or an environmental state (e.g., the user's state) outside the electronic device 201, and then generate an electrical signal or data value corresponding to the detected state. According to an embodiment, the sensor 276 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor. Each of the parts of the gesture sensor, the gyro sensor, the atmospheric pressure sensor, the magnetic sensor, the acceleration sensor, the grip sensor, the proximity sensor, the color sensor, the infrared (IR) sensor, the biometric sensor, the temperature sensor, the humidity sensor, or the illuminance sensor has its own unique part ID.

The camera 280 (e.g., the camera module 180 of FIG. 1) according to an embodiment is operable to capture a still image and a video. According to an embodiment, the camera 280 includes one or more lenses, image sensors, image signal processors, or flashes. According to an embodiment, the camera 280 may include a plurality of cameras (e.g., at least one of a front camera, a front camera2, a rear camera, a rear camera2, a rear camera3, and a rear camera 4). Each of the plurality of cameras includes a plurality of parts (e.g., at least one of a front camera module, a front camera sensor, a front camera 2 module, a front camera 2 sensor, a rear camera module, a rear camera sensor, a rear camera2 module, a rear camera2 sensor, a rear camera3 module, a rear camera3 sensor, a rear camera4 module, a rear camera4 sensor, an upper camera module, and an upper camera sensor).

The battery 289 (e.g., the battery 189 of FIG. 1) according to an embodiment is operable to supply power to at least one part of the electronic device 201. According to an embodiment, the battery 289 includes, for example, a primary cell which is not rechargeable, a secondary cell which is rechargeable, or a fuel cell. Each of the one or more batteries included in the battery 289 according to an embodiment has a part ID.

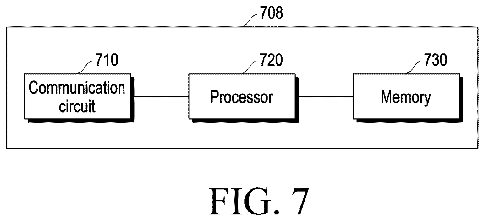

The communication circuitry (or communication module) 290 (e.g., communication module 190 of FIG. 1) according to an embodiment includes a wired communication module (e.g., USB communication module) and/or a wireless communication module (e.g., cellular module, wireless-fidelity (Wi-Fi) module, Bluetooth module, or near field communication (NFC) module). The communication circuitry 290 according to an embodiment is operable to communicate with an external server (e.g., the server 108 of FIG. 1 or the server 708 of FIG. 7).

According to an embodiment, the electronic device 201 is not limited to the configuration illustrated in FIG. 2 and may further include various parts. According to an embodiment, the electronic device 201 may further include an input module (not illustrated) (e.g., the input module 150 of FIG. 1) and may receive various inputs associated with performing an operation (or method) of providing part replacement history information through the input module.

In an embodiment, major parts of the electronic device 201 have been described above in connection with FIG. 2. However, in various embodiments, not all of the parts illustrated in FIG. 2 are essential parts, and the connection relationship between the main parts of the electronic device 201 described above with reference to FIG. 2 may be changed according to various embodiments.

An electronic device (e.g., the electronic device 101 of FIG. 1 or the electronic device 201 of FIG. 2) according to an embodiment includes communication circuitry 190 or 290, a display 160 or 260, memory 130 or 230 storing instructions, and at least one processor 120 or 220. The instructions are operable, when executed by the at least one processor individually or collectively, to enable the electronic device to obtain part identification information about a part included in the electronic device based on completion of booting of the electronic device. The instructions are operable, when executed by the at least one processor individually or collectively, to enable the electronic device to identify whether the part is a replaced part based on whether the part identification information is stored in a designated storage area of the memory. The instructions are operable, when executed by the at least one processor individually or collectively, to enable the electronic device to, based on identifying that the part is the replaced part, transmit, through the communication circuitry to an external electronic device, information about the electronic device including the part identification information, electronic device identification information about the electronic device, and memory identification information about the memory. The instructions are operable, when executed by the at least one processor individually or collectively, to enable the electronic device to receive authenticity information about the part in response to the transmission of the information about the electronic device and store the authenticity information about the part in the designated storage area of the memory. The instructions are operable, when executed by the at least one processor individually or collectively, to enable the electronic device to, based on a designated event, display, on the display, part replacement history information including the authenticity information about the part.

The part replacement history information according to an embodiment includes a name of the part, a replacement time of the part, and the authenticity information about the part.

The designated event according to an embodiment includes a user input event for displaying the part replacement history information.

The designated storage area of the memory according to an embodiment includes an area where deletion of data is impossible.

The instructions according to an embodiment are operable, when executed by the at least one processor individually or collectively, to enable the electronic device to obtain the part identification information about the part from a device driver corresponding to the part.

The instructions according to an embodiment are operable, when executed by the at least one processor individually or collectively, to enable the electronic device to display, on the display, the part replacement history information including authenticity information corresponding to each of a plurality of parts based on the designated event.

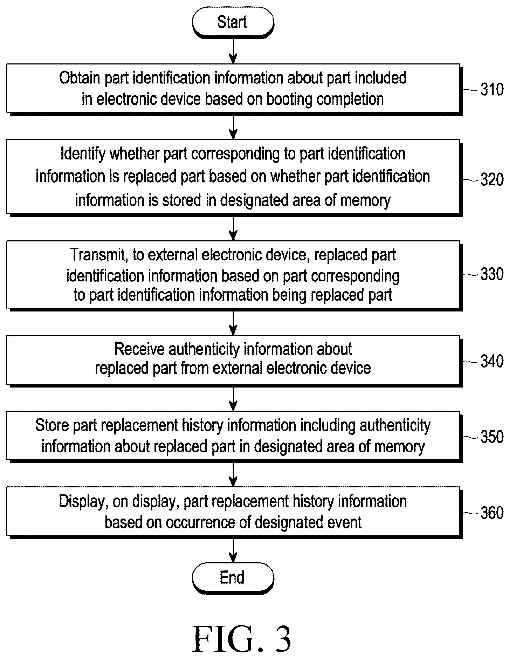

FIG. 3 is a flowchart illustrating an operation of providing part replacement history information according to an embodiment.

Referring to FIG. 3, according to an embodiment, a processor (e.g., the processor 120 of FIG. 1 or the processor 220 of FIG. 2) of an electronic device (e.g., the electronic device 101 of FIG. 1 or the electronic device 201 of FIG. 2) is operable to perform at least one of operations 310 to 360.

In operation 310, the processor 220 according to an embodiment is operable to obtain (or identify) part identification information (e.g., a part ID) about the part included in the electronic device 201, based on booting completion. The processor 220 according to an embodiment is operable to identify at least one part designated to be replaceable among the parts included in the electronic device 201, and is operable to obtain at least one piece of part identification information corresponding to each of the at least one part using a device driver corresponding to the at least one part. The part of the electronic device 201 according to an embodiment may be a piece of hardware, and the device driver may be a program for connecting an application program and a part in an operating system of the electronic device 201. For example, if the electronic device 201 includes a front camera module, a front camera sensor, a rear camera module, a rear camera sensor, a rear camera 2 module, a rear camera 2 sensor, a rear camera 3 module, a rear camera 3 sensor, a rear camera 4 module, a rear camera 4 sensor, a display cell, a display chip, a battery, and an AP, the processor 220 is operable to obtain part identification information (e.g., part ID) such as a front camera module ID, a front camera sensor ID, a rear camera module ID, a rear camera sensor ID, a rear camera 2 module ID, a rear camera 2 sensor ID, a rear camera 3 module ID, a rear camera 3 sensor ID, a rear camera 4 module ID, a rear camera 4 sensor ID, a display cell ID, a display chip ID, a battery ID, and an AP ID using the device drivers corresponding to parts included in the electronic device 201, based on booting completion. The type and number of parts and part IDs included in the electronic device 201 are not be limited to the examples provided above.

In operation 320, the processor 220 according to an embodiment is operable to identify whether the part corresponding to the part identification information is a replaced part, based on whether the part identification information is stored in the designated area of the memory 230. The processor 220 according to an embodiment is operable to identify whether the part identification information obtained based on booting completion is included in the information about the electronic device (or a file including the information about the electronic device) stored in the designated storage area of the memory 230. When the part identification information obtained based on booting completion is not included in the information about the electronic device, the processor 220 according to an embodiment is operable to identify that the part corresponding to the obtained part identification information is a replaced part and, when the obtained part identification information is included in the information about the electronic device, identify that the part corresponding to the obtained part identification information is a pre-existing (unreplaced) part. The processor 220 according to an embodiment is operable to compare the obtained part identification information with at least one piece of part identification information included in the information about the electronic device stored in the designated storage area to determine whether they are the same. When the obtained part identification information is the same as the at least one piece of part identification information included in the information about the electronic device stored in the designated storage area, the processor 220 according to an embodiment is operable to identify that the part corresponding to the obtained part identification information is a pre-existing (unreplaced) part. When the obtained part identification information is not the same as the at least one piece of part identification information included in the information about the electronic device stored in the designated storage area, the processor 220 according to an embodiment is operable to determine that a replaced part exists in the obtained part identification information and is operable to obtain part identification information about the replaced part. The designated storage area of the memory 230 according to an embodiment is a storage area (e.g., persistent partition) of the storage area of the memory 230, designated so that the stored data is not deleted even during a factory reset where the electronic device 201 is initialized, such as a state immediately after factory shipment. For example, the designated storage area may be a part replacement history information storage area. The information about the electronic device according to an embodiment includes at least one piece of part identification information corresponding to at least one part included in the electronic device 201, electronic device identification information, and memory identification information. For example, the at least one piece of part identification information includes at least one unique part ID of each of at least one replaceable part present in the electronic device 201. For example, the electronic device identification information includes a serial number (S/N), which is a unique number of the electronic device 201. For example, the memory identification information includes a unique number (U/N) (e.g., a unique number of a universal flash storage (UFS) or a unique number of an embedded multimedia card (eMMC)) that is a unique number of a storage included in the memory 230. The electronic device 201 according to an embodiment is operable to store information about the electronic device in the designated area of the memory 230 upon factory shipment, or is operable to store information about the electronic device upon completion of initial booting (e.g., initial booting after factory shipment or initial booting after activation for registration of use of the electronic device 201).

In operation 330, the processor 220 according to an embodiment is operable to transmit the part identification information about the replaced part to the external electronic device (e.g., the server 108 of FIG. 1 or the server 708 of FIG. 7) through the communication circuitry 290 based on the part corresponding to the part identification information being identified as the replaced part. The processor 220 according to an embodiment is operable to transmit the updated information about the electronic device including the part identification information about the replaced part to the external electronic device instead of the part identification information about the part before replacement, based on the part corresponding to the part identification information being identified as the replaced part.

In operation 340, the processor 220 according to an embodiment is operable to receive information about whether the replaced part is genuine from the external electronic device in response to transmitting the part identification information about the replaced part to the external electronic device. According to an embodiment, the information about whether the replaced part is genuine includes information (e.g., genuine part or genuine part) indicating that the replaced part is genuine or information (e.g., unknown) indicating that the replaced part is unknown. The genuine part according to an embodiment may mean that the replaced part is a part of a designated manufacturer or a certified part. The unknown part according to an embodiment may mean that the replaced part is not a part of a designated manufacturer or is an uncertified part.

In operation 350, the processor 220 according to an embodiment is operable to store the part replacement history information including the authenticity information about the replaced part in the designated area of the memory 230 based on reception of the authenticity information about the replaced part. The processor 220 according to an embodiment is operable to store information about whether the replaced part is genuine, based on receiving the information about whether the replaced part is genuine, and is operable to update information about the electronic device to include the ID of the replaced part. The processor 220 according to an embodiment is operable to store part replacement history information including a part name of the replaced part, a replacement time (e.g., a replacement date and/or a replacement time point) of the replaced part, and information about whether the replaced part is genuine, in the designated area of the memory 230.

In operation 360, the processor 220 according to an embodiment is operable to display, on the display, part replacement history information based on the occurrence of a designated event. The processor 220 according to an embodiment is operable to identify the occurrence of the designated event when there is a user input for requesting a designated menu or function (e.g., a part replacement history display menu or function) of the electronic device 201 or when it is identified that the replaced part is genuine or unknown. When there is the user input for requesting the designated menu or function (e.g., the part replacement history display menu or function) of the electronic device 201, the processor 220 according to an embodiment is operable to display a part replacement history information screen including part replacement history information for each of the replaced parts recorded whenever the part of the electronic device 201 is replaced. When it is identified that the replaced part is genuine or unknown, the processor 220 according to an embodiment is operable to display the part replacement history information for the replaced part in a pop-up window. When another designated event occurs, the processor 220 according to an embodiment is operable to display the part replacement history information in another display manner.

A method for providing replacement history information about a part in an electronic device 101 or 201, according to an embodiment of the disclosure, may comprise obtaining part identification information about a part included in the electronic device based on completion of booting of the electronic device. The method scomprises identifying whether the part is a replaced part based on whether the part identification information is stored in a designated storage area of memory. The method comprises, based on identifying that the part is the replaced part, transmitting, through communication circuitry to an external electronic device, information about the electronic device including the part identification information, electronic device identification information about the electronic device, and memory identification information about the memory. The method comprises receiving authenticity information about the part from the external electronic device in response to the transmission of the electronic device and storing the authenticity information about the part in the designated storage area. The method comprises, based on a designated event, displaying, on a display, part replacement history information including the authenticity information about the part.

The part replacement history information according to an embodiment includes a name of the part, a replacement time of the part, and the authenticity information about the part.

The designated event according to an embodiment includess a user input event for displaying the part replacement history information.

The designated storage area of the memory according to an embodiment includes an area where deletion of data is impossible.

The method according to an embodiment comprises obtaining the part identification information about the part from a device driver corresponding to the part.

The method according to an embodiment includes, based on an occurrence of the designated event, displaying, on the display, the part replacement history information including a plurality of pieces of authenticity information respectively corresponding to a plurality of parts.

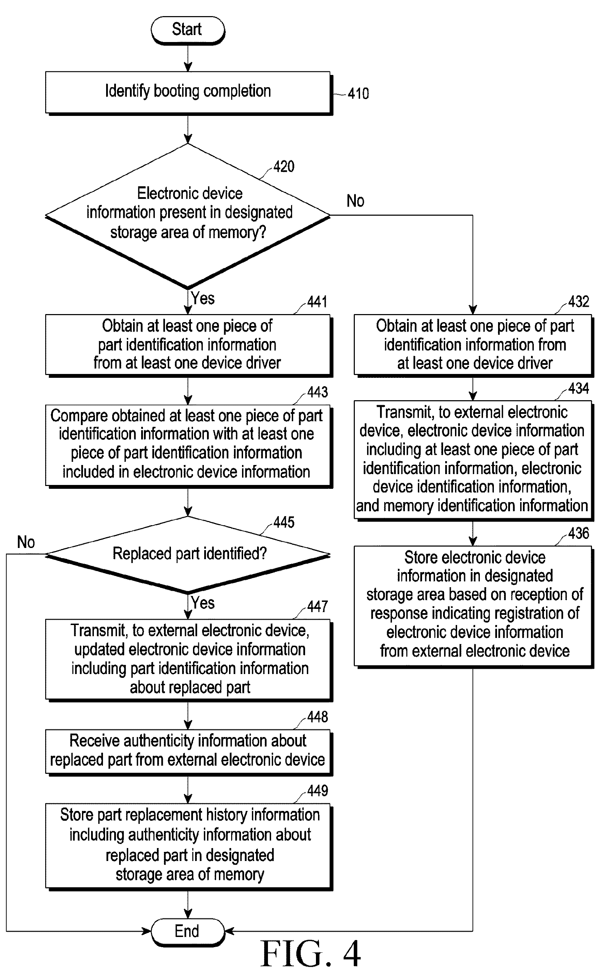

FIG. 4 is a flowchart illustrating an operation of registering information about an electronic device or providing part replacement history information based on whether booting is the initial booting in the electronic device according to an embodiment.

Referring to FIG. 4, according to an embodiment, a processor (e.g., the processor 120 of FIG. 1 or the processor 220 of FIG. 2) of an electronic device (e.g., the electronic device 101 of FIG. 1 or the electronic device 201 of FIG. 2) performs at least one of operations 410 to 449.

In operation 410, the processor 220 according to an embodiment is operable to identify completion of booting. The processor 220 is operable to perform booting every power-on of the electronic device 201.

In operation 420, the processor 220 according to an embodiment is operable to identify whether information about the electronic device is present in a designated area of the memory 230. When booting is completed, the processor 220 according to an embodiment is operable to identify initial booting when information about the electronic device is not stored in the designated area of the memory 230. When booting is completed, the processor 220 according to an embodiment is operable to identify that the booting is not initial booting when information about the electronic device is stored in the designated area of the memory 230. The initial booting according to an embodiment may mean booting by the first power-on of the electronic device 201 or booting by the first power-on after the activation for use registration of the electronic device 201. When the information about the electronic device is not stored in the designated area of the memory 230 when booting is completed (when the booting completion is the initial booting completion), the processor 220 according to an embodiment is operable to perform operation 432. When the information about the electronic device is stored in the designated area of the memory 230 when booting is completed (when the booting completion is not the initial booting completion), the processor 220 according to an embodiment is operable to perform operation 441.

In operation 432, the processor 220 according to an embodiment is operable to obtain at least one piece of part identification information from at least one device driver according to the completion of the initial booting. The processor 220 according to an embodiment is operable to obtain at least one piece of part identification information respectively corresponding to the at least one part from the at least one device driver included in the electronic device 201.

In operation 434, the processor 220 according to an embodiment is operable to transmit, to an external electronic device, the information about the electronic device including the at least one piece of part identification information, electronic device identification information, and memory identification information. For example, the at least one piece of part identification information includes at least one unique part ID of each of at least one replaceable part present in the electronic device 201. For example, the electronic device identification information includes a serial number (S/N), which is a unique number of the electronic device 201. For example, the memory identification information includes a unique number (U/N) (e.g., a unique number of a universal flash storage (UFS) or a unique number of an embedded multimedia card (eMMC)) that is a unique number of a storage included in the memory 230. The information about the electronic device may be transferred to and registered or stored in the external electronic device. For example, the external electronic device (e.g., the server 108 or part replacement history management server) is operable to store or register the electronic device information received from the electronic device 201 as a first terminal registration type.

In operation 436, the processor 220 according to an embodiment is operable to store the electronic device information in the designated storage area based on reception of a response indicating the registration (or registration completion) of the electronic device information from the external electronic device. Upon receiving a response indicating registration (or registration completion) of the electronic device information from the external electronic device and when network connection through the communication circuitry 290 is possible, the processor 220 according to an embodiment is operable to store the electronic device information in the designated storage area.

When network connection through the communication circuitry 290 is impossible or no response is received from the external electronic device, the processor 220 according to an embodiment is operable to store a flag and the electronic device information to be transmitted to the external electronic device in the memory 230. The processor 220 according to an embodiment is operable to (cumulatively) store, in the memory 230, the electronic device information updated by identification of part replacement, together with the flag, every booting, until a response is received from the external electronic device or network connection is possible.

According to an embodiment, the processor 220 is operable to obtain first updated electronic device information upon the next first booting (or first at least one piece of replaced part identification information) after storing the electronic device information obtained when the initial booting is completed. The processor 220 is operable to store, in the memory 230, the first updated electronic device information (or first at least one piece of replaced part identification information) in addition to the electronic device information (or cumulatively according to the order of time) when network connection is impossible or no response is received from the external electronic device even upon the completion of the next first booting after the initial booting. The processor 220 is operable to store, in the memory 230, the second updated electronic device information (or second at least one piece of replaced part identification information) in addition to the electronic device information and the first updated electronic device information (or cumulatively according to the order of time) when network connection is impossible or no response is received from the external electronic device even upon the completion of the next second booting after the first booting. The number of times of booting (and/or the number of part replacements) that occurs until network connection is possible or a response is received from the external electronic device from when the initial booting is completed may be different from, or not limited to, that described above. The processor 220 according to an embodiment is operable to transmit the information cumulatively stored in the memory 230 according to the order of time to the external electronic device when network connection through the communication circuitry 290 is possible or a response is received from the external electronic device.

For example, the processor 220 is operable to store the electronic device information and the flag in the designated area of the memory 230 in state in which network connection through the communication circuitry 290 is impossible or a response is not receivable from the external electronic device when the initial booting is completed. The processor 220 is operable to further store the first updated electronic device information including the replaced display part information and the first flag in the designated area of the memory 230 when the display part is identified to be replaced and network connection is impossible or a response is not receivable from the external electronic device when the first booting is completed after the initial booting. The processor 220 is operable to further store the second updated electronic device information including the replaced camera part information and the second flag in the designated area of the memory 230 when the camera part is identified to be replaced and network connection is impossible or a response is not receivable from the external electronic device when the second booting is completed after the first booting. The processor 220 is operable to further store the third updated electronic device information including the replaced other camera part information and the third flag in the designated area of the memory 230 when the camera part is identified to be replaced again but network connection is impossible or a response is not receivable from the external electronic device when the third booting is completed after the second booting.

In other words, when it is in a state of being unable to connect to the external electronic device (a state in which network connection is impossible or a response is not receivable from the external electronic device) while initial booting-->first booting-->second booting-->third booting are performed, the processor 220 is operable to store the electronic device information and the flag when the initial booting is completed and then cumulatively store the first to third updated electronic device information, updated whenever the subsequent booting is completed, and the first to third flags, in the memory 230 in the order of time.

According to an embodiment, when it is in a state in which network connection is possible and a response is receivable from the external electronic device (e.g., a state of being able to connect to the external electronic device), the processor 220 is operable to transmit, to the external electronic device, the cumulatively stored electronic device information and the first to third updated electronic device information in the order of the storage. For example, the processor 220 is operable to check the flag(s) stored in the memory 230 when booting is completed and transmit the electronic device information and updated electronic device information, not transmitted to the external electronic device, to the external electronic device.

In operation 441, when electronic device information is present in the designated storage area of the memory 230, the processor 220 according to an embodiment is operable to obtain at least one piece of part identification information from at least one device driver. The processor 220 according to an embodiment is operable to obtain at least one piece of part identification information respectively corresponding to the at least one part from the at least one device driver included in the electronic device 201.

In operation 443, the processor 220 according to an embodiment is operable to compare the obtained at least one piece of part identification information with at least one piece of part identification information included in the information about the electronic device stored in the designated storage area of the memory 230. The designated storage area of the memory 230 according to an embodiment is a storage area (e.g., persistent partition) of the storage area, designated so that the stored data is not deleted even during a factory reset where the electronic device 201 is initialized, such as a state immediately after factory shipment. For example, the designated storage area is a part replacement history information storage area. The information about the electronic device according to an embodiment includes at least one piece of part identification information corresponding to at least one part included in the electronic device 201, electronic device identification information, and memory identification information. For example, the at least one piece of part identification information includes at least one unique part ID of each of at least one replaceable part present in the electronic device 201. For example, the electronic device identification information includes a serial number (S/N), which is a unique number of the electronic device 201. For example, the memory identification information includes a unique number (U/N) (e.g., a unique number of a universal flash storage (UFS) or a unique number of an embedded multimedia card (eMMC)) that is a unique number of a storage included in the memory 230.

In operation 445, the processor 220 according to an embodiment is operable to identify whether there is a replaced part based on the comparison result. When the obtained at least one piece of part identification information and the at least one piece of part identification information included in the electronic device information are the same, the processor 220 according to an embodiment is operable to identify that there is no replaced part. When the obtained part identification information is not the same as the at least one piece of part identification information included in the information about the electronic device stored in the designated storage area, the processor 220 according to an embodiment is operable to identify that there is a replaced part and is operable to obtain part identification information about the replaced part.

In operation 447, the processor 220 according to an embodiment is operable to transmit updated electronic device information including the part identification information about the replaced part based on identifying the presence of the replaced part to the external electronic device (e.g., the server 108 of FIG. 1 or the server 708 of FIG. 7) through the communication circuitry 290. The processor 220 according to an embodiment is operable to transmit, to the external electronic device, the updated electronic device information including the part identification information about the replaced part instead of the part identification information about the part before replacement in the electronic device information.

In operation 448, the processor 220 according to an embodiment is operable to receive the authenticity information about the replaced part from the external electronic device. The processor 220 according to an embodiment is operable to receive the authenticity information about the replaced part from the external electronic device in response to transmitting the updated electronic device information including the part identification information about the replaced part from the external electronic device. According to an embodiment, the information about whether the replaced part is genuine includes information (e.g., genuine part or genuine part) indicating that the replaced part is genuine or information (e.g., unknown) indicating that the replaced part is unknown. The genuine part according to an embodiment means that the replaced part is a part of a designated manufacturer or a certified part. The unknown part according to an embodiment means that the replaced part is not a part of a designated manufacturer or is an uncertified part.

In operation 449, the processor 220 according to an embodiment is operable to store the part replacement history information including the authenticity information about the replaced part in the designated storage area of the memory 230. The part replacement history information according to an embodiment includes a part name of the replaced part, a replacement time (e.g., a replacement date and/or a replacement time point) of the replaced part, and information about whether the replaced part is genuine.

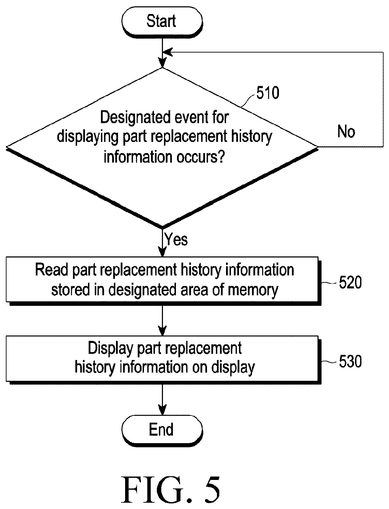

FIG. 5 is a flowchart illustrating an operation of displaying part replacement history information according to an embodiment.

Referring to FIG. 5, according to an embodiment, a processor (e.g., the processor 120 of FIG. 1 or the processor 220 of FIG. 2) of an electronic device (e.g., the electronic device 101 of FIG. 1 or the electronic device 201 of FIG. 2) is operable to perform at least one of operations 510 to 530.

In operation 510, the processor 220 according to an embodiment is operable to identify an occurrence of a designated event for displaying the part replacement history information. The processor 220 according to an embodiment is operable to identify the occurrence of the designated event when there is a user input for requesting a designated menu or function (e.g., a part replacement history display menu or function) of the electronic device 201. When the replaced part is identified to be genuine or unknown (e.g., when receiving and storing the authenticity information about the replaced part from the external electronic device), the processor 220 is operable to identify the occurrence of the designated event.

In operation 520, the processor 220 according to an embodiment is operable to read the part replacement history information stored in the designated storage area of the memory 230 based on the occurrence of the designated event. The part replacement history information according to an embodiment includes a part name of the replaced part, a replacement time (e.g., a replacement date and/or a replacement time point) of the replaced part, and information about whether the replaced part is genuine.

In operation 530, the processor 220 according to an embodiment is operable to display the part replacement history information on the display 260. The processor 220 according to an embodiment is operable to display the part replacement history screen based on a user input for requesting a part replacement history menu or function or, when obtaining the authenticity information about the replaced part, display the part replacement history information about the replaced part in a popup window.

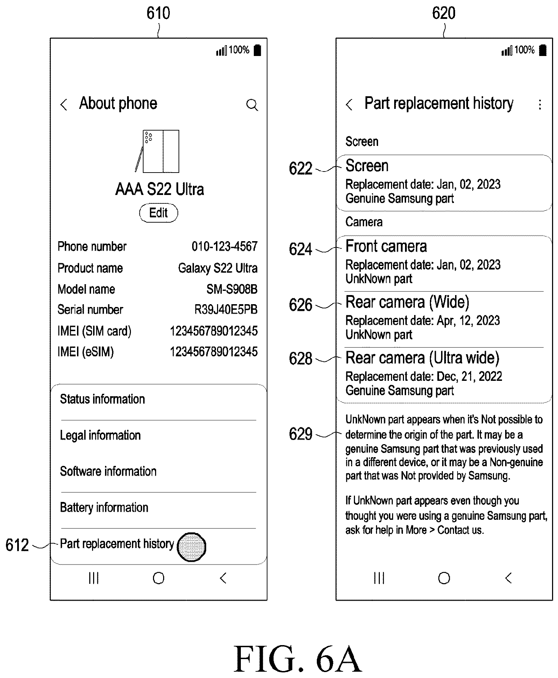

FIG. 6A is a view illustrating a part replacement history screen according to an embodiment.

Referring to FIG. 6A, a processor (e.g., the processor 120 of FIG. 1 or the processor 220 of FIG. 2) of an electronic device (e.g., the electronic device 101 of FIG. 1 or the electronic device 201 of FIG. 2) according to an embodiment is operable to display a screen 610 representing electronic device information (e.g., about phone) based on an information menu selection on a setting menu.

The processor 220 according to an embodiment is operable to display a part replacement history menu (or item) 612 on the screen 610 representing the electronic device information. The processor 220 according to an embodiment is operable to further display the name (AAA S22 Ultra), phone number, product name, electronic device unique ID (serial number), and/or international mobile equipment identity (IMEI) of the electronic device on the screen 610 representing the electronic device information. The processor 220 according to an embodiment is operable to further display a status information menu, legal information menu, software information menu, and/or battery information menu of the electronic device 201 on the screen 610 representing the electronic device information.

The processor 220 according to an embodiment is operable to display a screen 620 representing the part replacement history when there is a user input (e.g., a touch input) to the part replacement history menu (or item) 612 on the screen 610 representing the electronic device information. The processor 220 according to an embodiment is operable to display the part replacement history information about at least one part on the screen 620 representing the part replacement history. The part replacement history information according to an embodiment includes a part name of the replaced part, a replacement time (e.g., a replacement date and/or a replacement time point) of the replaced part, and information about whether the replaced part is genuine. The part replacement history information according to an embodiment includes a part name of the most recently replaced part, a replacement time (e.g., a replacement date and/or a replacement time point) of the most recently replaced part, and information about whether the most recently replaced part is genuine (genuine Samsung part or unknown part). When the display 260 and camera 280 are replaced with another display and another camera, the processor 220 according to an embodiment is operable to display the part replacement history information 622 about the screen (e.g., the display 260) on the screen 620 representing the part replacement history based on the replacement of the display 260 and display the part replacement history information 624 about the front camera part, the part replacement history information 626 about the rear camera(wide) part, and the part replacement history information 628 about the rear camera(ultra-wide) part based on the replacement of the camera 280. The processor 220 according to an embodiment is operable to further display a guide phrase 629 associated with the part replacement history on the screen 620 representing the part replacement history. For example, the guide phrase includes a phrase indicating that if it is impossible to determine whether the part is genuine, it may be represented as unknown, a phrase indicating that the genuine part (genuine Samsung part) is certified as a genuine part although it is not provided by the manufacturer (Samsung) of the electronic device or when it has been previously used in other devices, and/or a phrase indicating of requesting to contact the manufacturer when it is displayed as unknown although replaced with a genuine part, or may include other guide phrases.

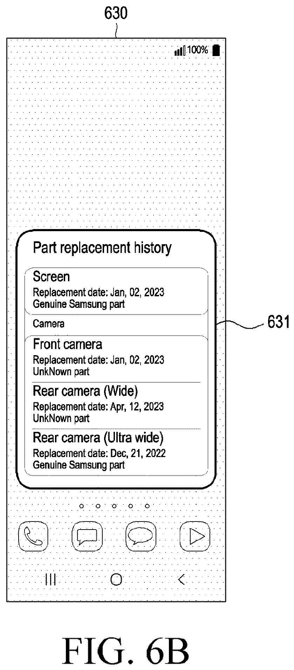

FIG. 6B is a view illustrating a part replacement history popup window according to an embodiment.

Referring to FIG. 6B, a processor (e.g., the processor 120 of FIG. 1 or the processor 220 of FIG. 2) of an electronic device (e.g., the electronic device 101 of FIG. 1 or the electronic device 201 of FIG. 2) is operable to display a popup window 631 indicating the part replacement history for the replaced part on the screen 630 of the electronic device when identifying that the replaced part is genuine or unknown. The popup window 631 indicating the part replacement history according to an embodiment is operable to display the part replacement history information about at least one part. The part replacement history information according to an embodiment includes a part name of the replaced part, a replacement time (e.g., a replacement date and/or a replacement time point) of the replaced part, and information about whether the replaced part is genuine. The part replacement history information according to an embodiment includes a part name of the most recently replaced part, a replacement time (e.g., a replacement date and/or a replacement time point) of the most recently replaced part, and information about whether the most recently replaced part is genuine (genuine Samsung part or unknown part). FIG. 6B illustrates a case in which, like in FIG. 6A, the part replacement history information about the screen (e.g., the display 260), the part replacement history information about the front camera part, the part replacement history information about the rear camera(wide) part, and the part replacement history information about the rear camera(ultra-wide) part are displayed in the popup window 631. However, the popup window is operable to display only the part replacement history for the currently identified replaced part.

FIG. 7 is a block diagram illustrating a server according to an embodiment.

Referring to FIG. 7, a server (e.g., a part replacement history (PRH) server) 708 (e.g., the server 108 of FIG. 1) according to an embodiment is operable to certify whether the replaced part in the electronic device 201 is genuine and provide authenticity information about the replaced part based on information collected from the electronic device 201 through communication with an external electronic device (e.g., the electronic device 201, hereinafter the electronic device 201 is described as an example). The server 708 according to an embodiment is operable to store and manage the part replacement history information about the electronic device 201. The server 708 according to an embodiment is operable to store and manage the part replacement history information about each of a plurality of electronic devices including the electronic device 201.

The server 708 according to an embodiment includes communication circuitry 710, a processor 720, and memory 730. The server 708 according to an embodiment is not limited thereto and may add other various parts.

The communication circuitry (or communication module) 710 according to an embodiment includes a wired communication module (e.g., USB communication module) and/or a wireless communication module (e.g., cellular module, wireless-fidelity (Wi-Fi) module, Bluetooth module, or near field communication (NFC) module). The communication circuitry 710 according to an embodiment is operable to communicate with an external electronic device (e.g., the electronic device 101 of FIG. 1 or the electronic device 201 of FIG. 2).

The processor 720 according to an embodiment includes a central processing unit (CPU). The processor 720 according to an embodiment is operable to perform the overall control operation of the server 708. The processor 720 according to an embodiment is operable to perform an operation of certifying whether the replaced part in the electronic device 201 is genuine and providing authenticity information about the replaced part based on information collected from the electronic device 201. The processor 720 according to an embodiment is operable to perform an operation of storing and managing the part replacement history information about the electronic device 201. The processor 720 according to an embodiment is operable to store and manage the part replacement history information about each of a plurality of electronic devices including the electronic device 201.

The processor 720 according to an embodiment is operable to receive at least one piece of part identification information, electronic device identification information, and memory identification information from the electronic device 201. The processor 720 according to an embodiment is operable to receive electronic device information including at least one piece of part identification information corresponding to at least one part included in the electronic device 201, electronic device identification information, and memory identification information. For example, the at least one piece of part identification information includes at least one unique part ID of each of at least one replaceable part present in the electronic device 201. For example, the electronic device identification information includes a serial number (S/N), which is a unique number of the electronic device 201. For example, the memory identification information includes a unique number (U/N) (e.g., a unique number of a universal flash storage (UFS) or a unique number of an embedded multimedia card (eMMC)) that is a unique number of a storage included in the memory 230. When initial booting of the electronic device 201 is completed (e.g., when the electronic device is not registered one), or when the board (or main board or PBA) of the electronic device 201 is replaced or, after booting of the electronic device 201 is completed, there is a replaced part (e.g., when the electronic device is a registered one), the processor 720 according to an embodiment is operable to receive the at least one piece of part identification information, electronic device identification information, and memory identification information from the electronic device 201. The at least one piece of part identification information received (e.g., when not registered) upon the initial booting of the electronic device 201 or upon booting when the board (or main board or PBA) is replaced may not include the part identification information about the replaced part. The at least one piece of part identification information received when the booting of the electronic device 201 is not the initial booting (e.g., when registered) may include the part identification information about the replaced part.

When booting is performed after the board (or main board or PBA) is replaced, the processor 720 according to an embodiment is operable to receive electronic device information including the serial number before replacement and the serial number after replacement. When receiving the electronic device information including the serial number before replacement and the serial number after replacement, the processor 720 according to an embodiment is operable to map the serial number before replacement and the serial number after replacement and transmit authenticity information about the replaced part, pre-stored corresponding to the serial number before replacement, to the electronic device 201.

The processor 720 according to an embodiment is operable to identify the authenticity information about the replaced part in the electronic device 201 using the at least one piece of part identification information, electronic device identification information, and memory identification information received from the electronic device 201.

The processor 720 according to an embodiment is operable to identify whether the electronic device 201 is a registered electronic device when receiving the at least one piece of part identification information, electronic device identification information, and memory identification information from the electronic device 201 and, when the electronic device 201 is a registered electronic device, identify the authenticity information about the replaced part in the electronic device 201 using the received at least one piece of part identification information, electronic device identification information, and memory identification information.

When the electronic device 201 is a registered electronic device 201, the processor 720 according to an embodiment is operable to identify whether the memory identification information is identical to the memory identification information of the pre-registered electronic device information and, when the electronic device 201 is a registered electronic device 201 and the memory identification information is identical to the pre-registered memory identification information, identify the authenticity information about the replaced part in the electronic device 201 using the received at least one piece of part identification information, electronic device identification information, and memory identification information.

When the electronic device 201 is a registered electronic device 201 or when the electronic device 201 is a registered electronic device 201 and the memory identification information is registered memory identification information when receiving the at least one piece of part identification information, electronic device identification information, and memory identification information, the processor 720 according to an embodiment is operable to compare the received at least one piece of part identification information with the at least one piece of part identification information included in the pre-registered electronic device information. When part identification information not included in the pre-registered electronic device information is present in the received at least one piece of part identification information as a result of the comparison, the processor 720 according to an embodiment is operable to determine that the part identification information not included in the pre-registered electronic device information is part identification information about the replaced part.

The processor 720 according to an embodiment is operable to identify whether the replaced part is genuine using the part identification information about the replaced part.

The processor 720 according to an embodiment is operable to identify whether the replaced part is genuine based on whether the part identification information about the replaced part observes a predetermined numbering rule, whether there is a reproduction history corresponding to the part identification information about the replaced part, whether there is another electronic device mounting history corresponding to the part identification information about the replaced part, and/or whether the reproduction of the replaced part and the reproduction while equipped in another electronic device is the most recently.

When the part identification information about the replaced part does not observe the numbering rule, the processor 720 according to an embodiment is operable to identify (or determine) the replaced part as unknown. When the part identification information about the replaced part observes the numbering rule, there is no reproduction history corresponding to the part identification information about the replaced part, and there is no history in which the part identification information about the replaced part is equipped in the other electronic device, the processor 720 according to an embodiment is operable to identify (or determine) it as genuine (e.g., class-A genuine). When the part identification information about the replaced part observes the numbering rule, there is no reproduction history corresponding to the part identification information about the replaced part, and the part identification information about the replaced part has a history of equipment in the other electronic device, the processor 720 according to an embodiment is operable to identify (or determine) it as unknown (e.g., arbitrarily recycled). When the part identification information about the replaced part observes the numbering rule, there is a reproduction history corresponding to the part identification information about the replaced part, and there is no history in which the part identification information about the replaced part is equipped in the other electronic device, the processor 720 according to an embodiment is operable to identify (or determine) it as genuine (e.g., class-B genuine). When the part identification information about the replaced part observes the numbering rule, there is a reproduction history corresponding to the part identification information about the replaced part, and the part identification information about the replaced part has a history of equipment in the other electronic device, and the history of equipment is more recent than the reproduction history, the processor 720 according to an embodiment is operable to identify (or determine) it as genuine (e.g., class-B genuine). When the part identification information about the replaced part observes the numbering rule, there is a reproduction history corresponding to the part identification information about the replaced part, and the part identification information about the replaced part has a history of equipment in the other electronic device 201, and the reproduction history is more recent than the history of equipment, the processor 720 according to an embodiment is operable to identify (or determine) it as unknown (e.g., arbitrarily recycled).

The numbering rule according to an embodiment includes a predetermined numbering rule for each part type. For example, the numbering rule corresponding to the camera 280 part includes a rule of four uppercase English letters and 11 numbers or upper English letters (e.g., SCJAV12D901F401). For example, the numbering rule corresponding to the display chip part includes a rule of one uppercase English letter, a number, two uppercase English letters, a number, one uppercase English letter, five numbers or uppercase English letters, two uppercase English letters, and three numbers (e.g., A3AZ1S2687HAC019). For example, the numbering rule corresponding to the battery part includes a rule of 'GH' number (2 digits), -(minus sign), number (5 digits), uppercase English letter (1 digit), +(plus sign), uppercase English letter (2 digits), number and upper/lowercase English letter (7 digits), + (plus sign), number and upper/lowercase English letter (4 to 10 digits) (e.g., GH43-05192B+AAbWA02KD+05419KSN00). The reproduction history according to an embodiment means the history of reuse of a part. The another electronic device equipment history according to an embodiment means the history of a part being equipped in another product. Each of the reproduction history and the another electronic device equipment history according to an embodiment may request a different server to identify and receive a response therefrom.

The processor 720 according to an embodiment is operable to transmit the authenticity information about the replaced part to the electronic device 201 based on completion of identification of the authenticity information about the replaced part.

The processor 720 according to an embodiment is operable to register the electronic device information using the at least one piece of part identification information, electronic device identification information, and memory identification information received from the electronic device 201 when the electronic device 201 is not a registered electronic device. When the electronic device 201 is a pre-registered electronic device, and the memory identification information is not identical to the memory identification information of the pre-registered electronic device information, the processor 720 according to an embodiment is operable to identify that the memory 230 or the board (e.g., the main board or printed circuit board assembly (PBA)) including the memory 230 is replaced, and transmit the pre-registered electronic device information to the electronic device 201.

The memory 730 according to an embodiment is operable to store instructions. The memory 730 according to an embodiment includes one or more storage media storing instructions. The memory 730 according to an embodiment stores various data used by at least one part of the server 708. The various data include, for example, software and input data or output data for a command related thereto. The memory 730 according to an embodiment stores instructions (or commands) that enable the processor 720 to perform an operation (or method) of providing authenticity information about a replaced part according to the disclosure.

According to an embodiment, the server 708 is not limited to the configuration illustrated in FIG. 7 and may further include various parts. According to an embodiment, the server 708 may further include an input module (not illustrated) and may receive various inputs associated with performing an operation (or method) of providing the authenticity information about the replaced part through the input module.

An electronic device (e.g., the server 708 of FIG. 7) according to an embodiment of the disclosure includes communication circuitry 710, memory 730 storing instructions, and at least one processor 720. The instructions are operable, when executed by the at least one processor individually or collectively, to enable the electronic device to receive, through the communication circuitry from an external electronic device (e.g., the electronic device 101 of FIG. 1 or the electronic device 201 of FIG. 2), information about the external electronic device including part identification information about a part included in the external electronic device, external electronic device identification information, and memory identification information about memory included in the external electronic device. The instructions are operable, when executed by the at least one processor individually or collectively, to enable the electronic device to identify whether the part is genuine or unknown using the information about the external electronic device. The instructions are operable, when executed by the at least one processor individually or collectively, to enable the electronic device to transmit, through the communication circuitry to the external electronic device, authenticity information about the part indicating whether the part is genuine or unknown.

The instructions according to an embodiment are operable, when executed by the at least one processor individually or collectively, to enable the electronic device to identify whether the part is genuine or unknown based on at least one of whether a numbering rule of the part identification information is observed, a reproduction history corresponding to the part identification information, a mounting history of another device corresponding to the part identification information, or a recent history between the reproduction history and the mounting history.

According to an embodiment, the instructions, when executed by the at least one processor individually or collectively, are operable to enable the electronic device to identify replacement of the memory of the external electronic device based on the memory identification information when receiving information about the external electronic device. The instructions are operable, when executed by the at least one processor, to enable the electronic device to transmit, to the external electronic device, part authenticity information pre-stored corresponding to another memory identification information before replacement of the memory.

The instructions according to an embodiment are operable, when executed by the at least one processor individually or collectively, to enable the electronic device to update the authenticity information about the part based on an input corresponding to modification of the authenticity information about the part. The instructions are operable, when executed by the at least one processor, to enable the electronic device to transmit the updated authenticity information about the part to the external electronic device.

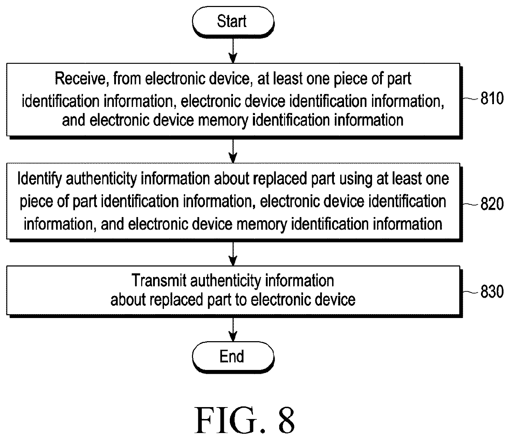

FIG. 8 is a flowchart illustrating an operation of providing authenticity information about a replaced part in a server according to an embodiment.

Referring to FIG. 8, according to an embodiment, the processor 720 of the server 708 (e.g., the server 108 of FIG. 1) is operable to perform at least one of operations 810 to 830.

In operation 810, the processor 720 according to an embodiment is operable to receive at least one piece of part identification information, electronic device identification information, and memory identification information from the electronic device 201. The processor 720 according to an embodiment is operable to receive electronic device information including at least one piece of part identification information corresponding to at least one part included in the electronic device 201, electronic device identification information, and memory identification information. For example, the at least one piece of part identification information includes at least one unique part ID of each of at least one replaceable part present in the electronic device 201. For example, the electronic device identification information includes a serial number (S/N), which is a unique number of the electronic device 201. For example, the memory identification information includes a unique number (U/N) (e.g., a unique number of a universal flash storage (UFS) or a unique number of an embedded multimedia card (eMMC)) that is a unique number of a storage included in the memory 230. When initial booting of the electronic device 201 is completed (e.g., when the electronic device is not registered one) or after booting of the electronic device 201 is completed, there is a replaced part (e.g., when the electronic device is a registered one), the processor 720 according to an embodiment is operable to receive electronic device information including the at least one piece of part identification information, electronic device identification information, and memory identification information from the electronic device 201. The at least one piece of part identification information received (e.g., when not registered) upon the initial booting of the electronic device 201 may not include the part identification information about the replaced part. The at least one piece of part identification information received when the booting of the electronic device 201 is not the initial booting (e.g., when registered) may include the part identification information about the replaced part.

In operation 820, the processor 720 according to an embodiment is operable to identify the authenticity information about the replaced part in the electronic device 201 using the at least one piece of part identification information, electronic device identification information, and memory identification information received from the electronic device 201.

The processor 720 according to an embodiment is operable to identify whether the electronic device 201 is a registered electronic device when receiving the at least one piece of part identification information, electronic device identification information, and memory identification information from the electronic device 201 and, when the electronic device 201 is a registered electronic device, identify the authenticity information about the replaced part in the electronic device 201 using the received at least one piece of part identification information, electronic device identification information, and memory identification information.

When the electronic device 201 is a registered electronic device 201, the processor 720 according to an embodiment is operable to identify whether the memory identification information is identical to the memory identification information of the pre-registered electronic device information and, when the electronic device 201 is a registered electronic device 201 and the memory identification information is identical to the pre-registered memory identification information, identify the authenticity information about the replaced part in the electronic device 201 using the received at least one piece of part identification information, electronic device identification information, and memory identification information.

The processor 720 according to an embodiment is operable to identify whether the replaced part is genuine using the part identification information about the replaced part.

The processor 720 according to an embodiment is operable to identify whether the replaced part is genuine based on whether the part identification information about the replaced part observes a predetermined numbering rule, whether there is a reproduction history corresponding to the part identification information about the replaced part, whether there is another electronic device mounting history corresponding to the part identification information about the replaced part, and/or whether the reproduction of the replaced part and the reproduction while equipped in another electronic device is the most recent. When the part identification information about the replaced part does not observe the numbering rule, the processor 720 according to an embodiment is operable to identify (or determine) the replaced part as unknown. When the part identification information about the replaced part observes the numbering rule, there is no reproduction history corresponding to the part identification information about the replaced part, and there is no history in which the part identification information about the replaced part is equipped in the other electronic device, the processor 720 according to an embodiment is operable to identify (or determine) it as genuine (e.g., class-A genuine). When the part identification information about the replaced part observes the numbering rule, there is no reproduction history corresponding to the part identification information about the replaced part, and the part identification information about the replaced part has a history of equipment in the other electronic device, the processor 720 according to an embodiment is operable to identify (or determine) it as unknown (e.g., arbitrarily recycled). When the part identification information about the replaced part observes the numbering rule, there is a reproduction history corresponding to the part identification information about the replaced part, and there is no history in which the part identification information about the replaced part is equipped in the other electronic device, the processor 720 according to an embodiment is operable to identify (or determine) it as genuine (e.g., class-B genuine). When the part identification information about the replaced part observes the numbering rule, there is a reproduction history corresponding to the part identification information about the replaced part, and the part identification information about the replaced part has a history of equipment in the other electronic device, and the history of equipment is more recent than the reproduction history, the processor 720 according to an embodiment is operable to identify (or determine) it as genuine (e.g., class-B genuine). When the part identification information about the replaced part observes the numbering rule, there is a reproduction history corresponding to the part identification information about the replaced part, and the part identification information about the replaced part has a history of equipment in the other electronic device 201, and the reproduction history is more recent than the history of equipment, the processor 720 according to an embodiment is operable to identify (or determine) it as unknown (e.g., arbitrarily recycled).

The numbering rule according to an embodiment may include a predetermined numbering rule for each part type. For example, the numbering rule corresponding to the camera 280 part includes a rule of four uppercase English letters and 11 numbers or upper English letters (e.g., SCJAV12D901F401). For example, the numbering rule corresponding to the display chip part includes a rule of one uppercase English letter, a number, two uppercase English letters, a number, one uppercase English letter, five numbers or uppercase English letters, two uppercase English letters, and three numbers (e.g., A3AZ1S2687HAC019). For example, the numbering rule corresponding to the battery part includes a rule of 'GH' number (2 digits), -(minus sign), number (5 digits), uppercase English letter (1 digit), +(plus sign), uppercase English letter (2 digits), number and upper/lowercase English letter (7 digits), + (plus sign), number and upper/lowercase English letter (4 to 10 digits) (e.g., GH43-05192B+AAbWA02KD+05419KSN00). The reproduction history according to an embodiment means the history of reuse of a part. The another electronic device equipment history according to an embodiment means the history of a part being equipped in another product. Each of the reproduction history and the another electronic device equipment history according to an embodiment is operable to request a different server to identify and receive a response therefrom.

In operation 830, the processor 720 according to an embodiment is operable to transmit the authenticity information about the replaced part to the electronic device 201 based on completion of identification of the authenticity information about the replaced part.

A method for providing authenticity information about a part in an electronic device (e.g., the server 108 of FIG. 1 or the server 708 of FIG. 2), according to an embodiment of the disclosure, is operable to comprise receiving, through communication circuitry from an external electronic device, information about the external electronic device including part identification information about a part included in the external electronic device, external electronic device identification information about the external electronic device, and memory identification information about memory included in the external electronic device. The method is operable to comprise identifying whether the part is genuine or unknown using the information about the external electronic device. The method is operable to comprise transmitting, through the communication circuitry to the external electronic device, the authenticity information about the part including information indicating that the part is genuine or information indicating that the part is unknown.

The method according to an embodiment may comprise identifying whether the part is genuine or unknown based on at least one of whether a numbering rule of the part identification information is observed, a reproduction history corresponding to the part identification information, a mounting history of another device corresponding to the part identification information, or a recent history between the reproduction history and the mounting history.

The method according to an embodiment may comprise identifying a replacement of the memory of the external electronic device based on the memory identification information when receiving the information about the external electronic device. The method may comprise transmitting, to the external electronic device, previously stored part authenticity information in response to another memory identification information before the replacement of the memory.

The method according to an embodiment may comprise updating the authenticity information about the part based on an input corresponding to a modification of the authenticity information about the part. The method may comprise transmitting, to the external electronic device, the updated authenticity information about the part.

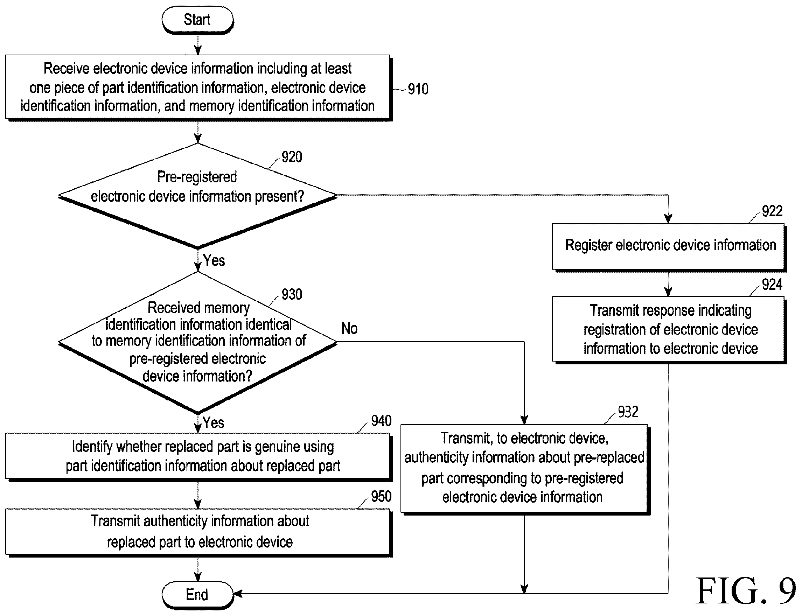

FIG. 9 is a flowchart illustrating an operation of registering information about an electronic device or providing information about whether a replaced part is genuine based on whether there is information about a pre-registered electronic device in a server according to an embodiment.

Referring to FIG. 9, according to an embodiment, the processor 720 of the server 708 (e.g., the server 108 of FIG. 1) is operable to perform at least one of operations 910 to 950.

In operation 910, the processor 720 according to an embodiment is operable to receive electronic device information including at least one piece of part identification information corresponding to at least one part included in the electronic device 201, electronic device identification information, and memory identification information. For example, the at least one piece of part identification information includes at least one unique part ID of each of at least one replaceable part present in the electronic device 201. For example, the electronic device identification information includes a serial number (S/N), which is a unique number of the electronic device 201. For example, the memory identification information includes a unique number (U/N) (e.g., a unique number of a universal flash storage (UFS) or a unique number of an embedded multimedia card (eMMC)) that is a unique number of a storage included in the memory 230. When initial booting of the electronic device 201 is completed (e.g., when the electronic device is not registered one) or after booting of the electronic device 201 is completed, there is a replaced part (e.g., when the electronic device is a registered one), the processor 720 according to an embodiment is operable to receive the at least one piece of part identification information, electronic device identification information, and memory identification information from the electronic device 201. The at least one piece of part identification information received (e.g., when not registered) upon the initial booting of the electronic device 201 may not include the part identification information about the replaced part. The at least one piece of part identification information received when the booting of the electronic device 201 is not the initial booting (e.g., when registered) may include the part identification information about the replaced part.

In operation 920, the processor 720 according to an embodiment is operable to identify whether there is pre-registered electronic device information. The processor 720 according to an embodiment is operable to identify whether the electronic device 201 is a pre-registered electronic device using the electronic device information when receiving the at least one piece of part identification information, electronic device identification information, and memory identification information from the electronic device 201. The processor 720 according to an embodiment is operable to perform operation 922 when there is no pre-registered electronic device information. The processor 720 according to an embodiment is operable to perform operation 930 when there is pre-registered electronic device information.

In operation 922, when there is no pre-registered electronic device information, the processor 720 according to an embodiment is operable to register the electronic device information using the received at least one piece of part identification information, electronic device identification information, and memory identification information.

In operation 924, the processor 720 according to an embodiment is operable to transmit a response indicating registration of the electronic device information to the electronic device 201. The electronic device 201 is operable to store the same information as the electronic device information registered in the server 708 in the designated storage area of the memory 230.

In operation 930, the processor 720 according to an embodiment is operable to identify whether the received memory identification information is identical to the memory identification information of the pre-registered electronic device information. The processor 720 according to an embodiment is operable to perform operation 932 when the electronic device 201 is a pre-registered electronic device and the received memory identification information is not identical to the memory identification information of the pre-registered electronic device information. The processor 720 according to an embodiment is operable to perform operation 940 when the electronic device 201 is a pre-registered electronic device and the received memory identification information is identical to the memory identification information of the pre-registered electronic device information.

In operation 932, the processor 720 according to an embodiment is operable to transmit authenticity information about the pre-replaced part corresponding to the pre-registered electronic device information to the electronic device 201. When the electronic device 201 is a pre-registered electronic device, and the memory identification information is not identical to the memory identification information of the pre-registered electronic device information, the processor 720 according to an embodiment is operable to identify that the memory 230 or the board (e.g., the main board or printed circuit board assembly (PBA)) including the memory 230 is replaced, and transmit the pre-registered electronic device information (including the authenticity information about the pre-replaced part) to the electronic device 201.

In operation 940, the processor 720 according to an embodiment is operable to identify the authenticity information about the replaced part in the electronic device 201 using the at least one piece of part identification information, electronic device identification information, and memory identification information received from the electronic device 201. When the electronic device 201 is a registered electronic device 201, and the memory identification information is identical to the pre-registered memory identification information, the processor 720 according to an embodiment is operable to identify the authenticity information about the replaced part in the electronic device 201 using the received at least one piece of part identification information, electronic device identification information, and memory identification information. The processor 720 according to an embodiment is operable to compare the received at least one piece of part identification information with the at least one piece of part identification information included in the pre-registered electronic device information. When part identification information not included in the pre-registered electronic device information is present in the received at least one piece of part identification information as a result of the comparison, the processor 720 according to an embodiment is operable to determine that the part identification information not included in the pre-registered electronic device information is part identification information about the replaced part.

The processor 720 according to an embodiment is operable to identify whether the replaced part is genuine using the part identification information about the replaced part.

The processor 720 according to an embodiment is operable to identify whether the replaced part is genuine based on whether the part identification information about the replaced part observes a predetermined numbering rule, whether there is a reproduction history corresponding to the part identification information about the replaced part, whether there is another electronic device mounting history corresponding to the part identification information about the replaced part, and/or whether the reproduction of the replaced part and the reproduction while equipped in another electronic device is the most recently.

When the part identification information about the replaced part does not observe the numbering rule, the processor 720 according to an embodiment is operable to identify (or determine) the replaced part as unknown. When the part identification information about the replaced part observes the numbering rule, there is no reproduction history corresponding to the part identification information about the replaced part, and there is no history in which the part identification information about the replaced part is equipped in the other electronic device, the processor 720 according to an embodiment is operable to identify (or determine) it as genuine (e.g., class-A genuine). When the part identification information about the replaced part observes the numbering rule, there is no reproduction history corresponding to the part identification information about the replaced part, and the part identification information about the replaced part has a history of equipment in the other electronic device, the processor 720 according to an embodiment is operable to identify (or determine) it as unknown (e.g., arbitrarily recycled). When the part identification information about the replaced part observes the numbering rule, there is a reproduction history corresponding to the part identification information about the replaced part, and there is no history in which the part identification information about the replaced part is equipped in the other electronic device, the processor 720 according to an embodiment is operable to identify (or determine) it as genuine (e.g., class-B genuine). When the part identification information about the replaced part observes the numbering rule, there is a reproduction history corresponding to the part identification information about the replaced part, and the part identification information about the replaced part has a history of equipment in the other electronic device, and the history of equipment is more recent than the reproduction history, the processor 720 according to an embodiment is operable to identify (or determine) it as genuine (e.g., class-B genuine). When the part identification information about the replaced part observes the numbering rule, there is a reproduction history corresponding to the part identification information about the replaced part, and the part identification information about the replaced part has a history of equipment in the other electronic device 201, and the reproduction history is more recent than the history of equipment, the processor 720 according to an embodiment is operable to identify (or determine) it as unknown (e.g., arbitrarily recycled).

The numbering rule according to an embodiment may include a predetermined numbering rule for each part type. For example, the numbering rule corresponding to the camera 280 part may include a rule of four uppercase English letters and 11 numbers or upper English letters (e.g., SCJAV12D901F401). For example, the numbering rule corresponding to the display chip part may include a rule of one uppercase English letter, a number, two uppercase English letters, a number, one uppercase English letter, five numbers or uppercase English letters, two uppercase English letters, and three numbers (e.g., A3AZ1S2687HAC019). For example, the numbering rule corresponding to the battery part may include a rule of 'GH' number (2 digits), -(minus sign), number (5 digits), uppercase English letter (1 digit), +(plus sign), uppercase English letter (2 digits), number and upper/lowercase English letter (7 digits), + (plus sign), number and upper/lowercase English letter (4 to 10 digits) (e.g., GH43-05192B+AAbWA02KD+05419KSN00). The reproduction history according to an embodiment may mean the history of reuse of a part. The another electronic device equipment history according to an embodiment may mean the history of a part being equipped in another product. Each of the reproduction history and the another electronic device equipment history according to an embodiment may request a different server to identify and receive a response therefrom.

In operation 950, the processor 720 according to an embodiment is operable to transmit the authenticity information about the replaced part to the electronic device 201 based on completion of identification of the authenticity information about the replaced part.

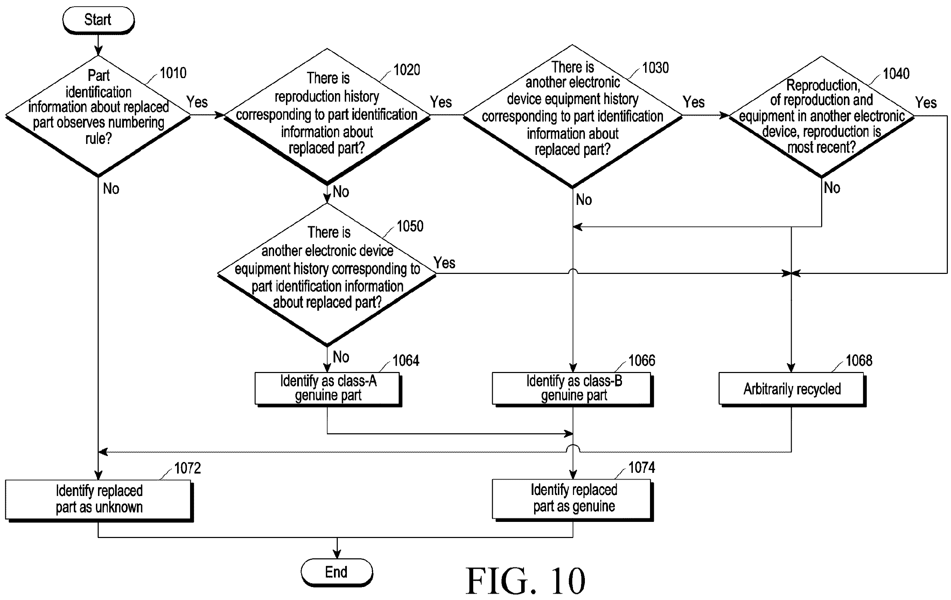

FIG. 10 is a flowchart illustrating an operation of identifying information about whether a replaced part is genuine according to an embodiment.

Referring to FIG. 10, according to an embodiment, the processor 720 of the server 708 (e.g., the server 108 of FIG. 1) is operable to perform at least one of operations 1010 to 1074.

In operation 1010, the processor 720 according to an embodiment is operable to identify (or determine) whether the part identification information about the replaced part observes the numbering rule. The numbering rule according to an embodiment may include a predetermined numbering rule for each part type. For example, the numbering rule corresponding to the camera 280 part may include a rule of four uppercase English letters and 11 numbers or upper English letters (e.g., SCJAV12D901F401). For example, the numbering rule corresponding to the display chip part may include a rule of one uppercase English letter, a number, two uppercase English letters, a number, one uppercase English letter, five numbers or uppercase English letters, two uppercase English letters, and three numbers (e.g., A3AZ1S2687HAC019). For example, the numbering rule corresponding to the battery part may include a rule of 'GH' number (2 digits), -(minus sign), number (5 digits), uppercase English letter (1 digit), +(plus sign), uppercase English letter (2 digits), number and upper/lowercase English letter (7 digits), + (plus sign), number and upper/lowercase English letter (4 to 10 digits) (e.g., GH43-05192B+AAbWA02KD+05419KSN00). The processor 720 according to an embodiment may perform operation 1020 when the part identification information about the replaced part observes the numbering rule and perform operation 1072 when the part identification information about the replaced part does not observe the numbering rule.

In operation 1020, the processor 720 according to an embodiment is operable to identify whether there is reproduction history corresponding to the part identification information about the replaced part. The reproduction history according to an embodiment may mean the history of reuse of a part. The server 708 according to an embodiment is operable to store the reproduction history of parts and use the stored information, or is operable to request the reproduction history of the replaced part and receive a response from another device managing the reproduction history. The processor 720 according to an embodiment is operable to perform operation 1030 when there is the reproduction history corresponding to the part identification information about the replaced part and perform operation 1050 when there is no reproduction history corresponding to the part identification information about the replaced part.

In operation 1030, the processor 720 according to an embodiment is operable to identify whether there is an another electronic device equipment history corresponding to the part identification information about the replaced part. The another electronic device equipment history according to an embodiment may mean the history of the replaced part having been equipped in another electronic device. The server 708 according to an embodiment is operable to store the another terminal equipment history of parts and use the stored information, or is operable to request the another terminal equipment history of the replaced part and receive a response from another device managing the another terminal equipment history. The processor 720 according to an embodiment is operable to perform operation 1040 when there is the another terminal equipment history corresponding to the part identification information about the replaced part and perform operation 1066 when there is no another terminal equipment history corresponding to the part identification information about the replaced part.

In operation 1040, the processor 720 according to an embodiment is operable to identify whether, of reproduction and equipment, equipment is the most recent. The processor 720 according to an embodiment is operable to perform operation 1066 when the reproduction of the replaced part is not more recent than the equipment in another electronic device. The processor 720 according to an embodiment is operable to perform operation 1068 when the reproduction of the replaced part is more recent than the equipment in another electronic device.

In operation 1050, the processor 720 according to an embodiment is operable to identify whether there is an another electronic device equipment history corresponding to the part identification information about the replaced part. The another electronic device equipment history according to an embodiment may mean the history of the replaced part having been equipped in another electronic device. The server 708 according to an embodiment is operable to store the another electronic device equipment history of parts and use the stored information, or is operable to request the another electronic device equipment history of the replaced part and receive a response from another device managing the another electronic device equipment history. The processor 720 according to an embodiment is operable to perform operation 1064 when there is no another terminal equipment history corresponding to the part identification information about the replaced part and perform operation 1068 when there is another terminal equipment history corresponding to the part identification information about the replaced part.

In operation 1064, the processor 720 according to an embodiment is operable to identify the replaced part as a class-A genuine part. When the part identification information about the replaced part observes the numbering rule, there is no reproduction history corresponding to the part identification information about the replaced part, and there is no history in which the part identification information about the replaced part is equipped in the other electronic device, the processor 720 according to an embodiment is operable to identify (or determine) it as a class-A genuine part.

In operation 1066, the processor 720 according to an embodiment is operable to identify the replaced part as a class-B genuine part. When the part identification information about the replaced part observes the numbering rule, there is a reproduction history corresponding to the part identification information about the replaced part, and there is no history in which the part identification information about the replaced part is equipped in the other electronic device, the processor 720 according to an embodiment is operable to identify (or determine) it as a class-B genuine part. When the part identification information about the replaced part observes the numbering rule, there is a reproduction history corresponding to the part identification information about the replaced part, and the part identification information about the replaced part has a history of equipment in the other electronic device, and the history of equipment is more recent than the reproduction history, the processor 720 according to an embodiment is operable to identify (or determine) it as a class-B genuine part.

In operation 1068, the processor 720 according to an embodiment is operable to identify that replaced part is an arbitrarily recycled part. When the part identification information about the replaced part observes the numbering rule, there is no reproduction history corresponding to the part identification information about the replaced part, and the part identification information about the replaced part has a history of equipment in the other electronic device, the processor 720 according to an embodiment is operable to identify (or determine) it as arbitrarily recycled. When the part identification information about the replaced part observes the numbering rule, there is a reproduction history corresponding to the part identification information about the replaced part, and the part identification information about the replaced part has a history of equipment in the other electronic device 201, and the reproduction history is more recent than the history of equipment, the processor 720 according to an embodiment is operable to identify (or determine) it as arbitrarily recycled.

In operation 1072, the processor 720 according to an embodiment is operable to identify the replaced part as an unknown part. When the part identification information about the replaced part does not observe the numbering rule, the processor 720 according to an embodiment is operable to identify the replaced part as unknown. When the replaced part is an arbitrarily recycled part, the processor 720 according to an embodiment is operable to identify the replaced part as an unknown part.

In operation 1074, the processor 720 according to an embodiment is operable to identify the replaced part as genuine. When the replaced part is a class-A genuine part or a class-B genuine part, the processor 720 according to an embodiment is operable to identify the replaced part as genuine.

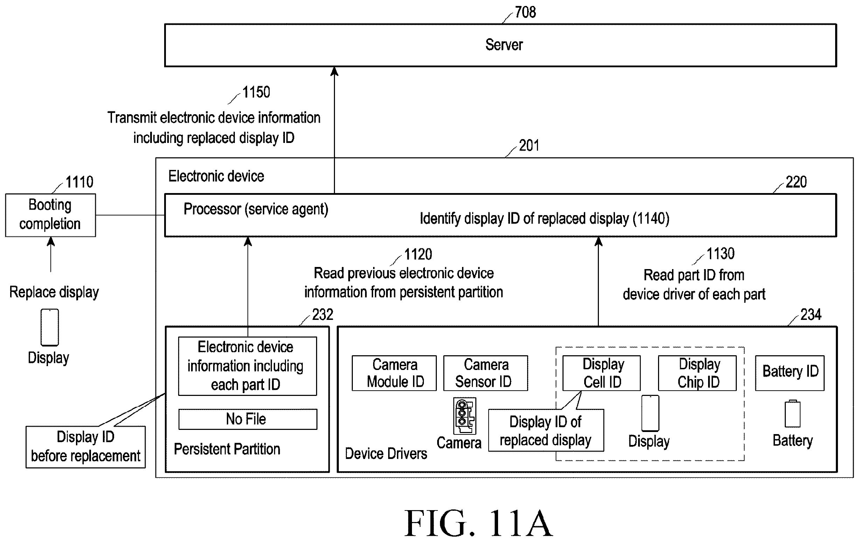

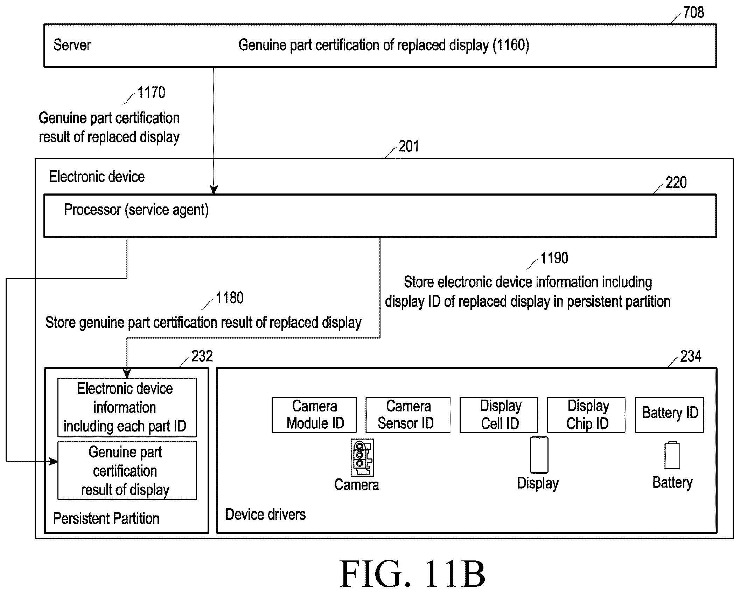

FIG. 11A is a view illustrating an operation of transmitting a display part ID of a replaced display to a server in an electronic device when replacing a display part in the electronic device according to an embodiment. FIG. 11B is a view illustrating an operation of providing authenticity information about a replaced display to an electronic device in a server according to an embodiment.

First, referring to FIG. 11A, the processor 220 of the electronic device 201 (e.g., the electronic device 101 of FIG. 1) according to an embodiment is operable to perform booting based on booting after replacement of the display part and identify booting completion (1110).

The processor 220 according to an embodiment is operable to execute a service agent (e.g., a service agent application or a service agent program) based on the booting completion and read electronic device information (electronic device information stored before booting) stored in the persistent partition 232 of the memory 230 using the executed service agent (1120). The persistent partition 232 of the memory 230 is operable to store electronic device information (or information file of the electronic device) including the part ID of each of the parts (e.g., replaceable parts) included in the electronic device 201 before booting.

The processor 220 according to an embodiment is operable to read the part ID of each of the parts (e.g., replaceable parts) included in the electronic device 201 using the device drivers 234 after booting completion (1130). For example, the part ID of each of the parts included in the electronic device 201 may include a camera module ID, a camera sensor ID, a display cell ID, a display chip ID, and/or a battery ID and may further include other part IDs. Each part ID read from booting completion based on the display part replacement according to an embodiment may not be included in each part ID of the persistent partition 232 or may include another display ID.

The processor 220 according to an embodiment is operable to identify the display ID of the replaced display (1140). When the display ID read using the device driver after booting completion is not included in each part ID of the persistent partition 232 or another display ID is included, the processor 220 according to an embodiment is operable to identify that the display ID read using the device driver is the display ID of the replaced display.

The processor 220 according to an embodiment is operable to transmit electronic device information (e.g., updated electronic device information) including the replaced display ID to the server 708 (e.g., the server 108 of FIG. 1) (1150). The updated electronic device information may include part IDs including the replaced display ID instead of the previous display ID included in the electronic device 201, the electronic device ID, and the memory ID.

Referring to FIG. 11B, the server 708 (e.g., the server 108 of FIG. 1) (or the processor 720 of the server 708) according to an embodiment is operable to perform genuine part certification (or identify whether it is genuine) on the replaced display based on reception of the electronic device information (e.g., updated electronic device information) including the replaced display ID (1160). The server 708 according to an embodiment is operable to identify whether the replaced display is genuine based on whether the replaced display ID observes a predetermined display part numbering rule, whether there is a reproduction history corresponding to the replaced display ID, whether there is another electronic device equipment history corresponding to the replaced display ID, and/or whether, of reproduction and equipment in another electronic device of the replaced display, reproduction is the most recent. The server 708 according to an embodiment is operable to identify whether the replaced display is genuine by perform operations similar to the operations of FIG. 10.

The server 708 (or the processor 720 of the server 708) according to an embodiment is operable to transmit the result of genuine part certification of the replaced display (or authenticity information about the replaced display) to the electronic device 201.

The processor 220 of the electronic device 201 according to an embodiment is operable to store, in the persistent partition 232, the result of genuine part certification of the replaced display (or authenticity information about the replaced display or file including the authenticity information about the replaced display) (1180).

The processor 220 of the electronic device 201 according to an embodiment is operable to store, in the persistent partition 232, updated electronic device information including the part IDs including the replaced display ID, electronic device ID, and memory ID.

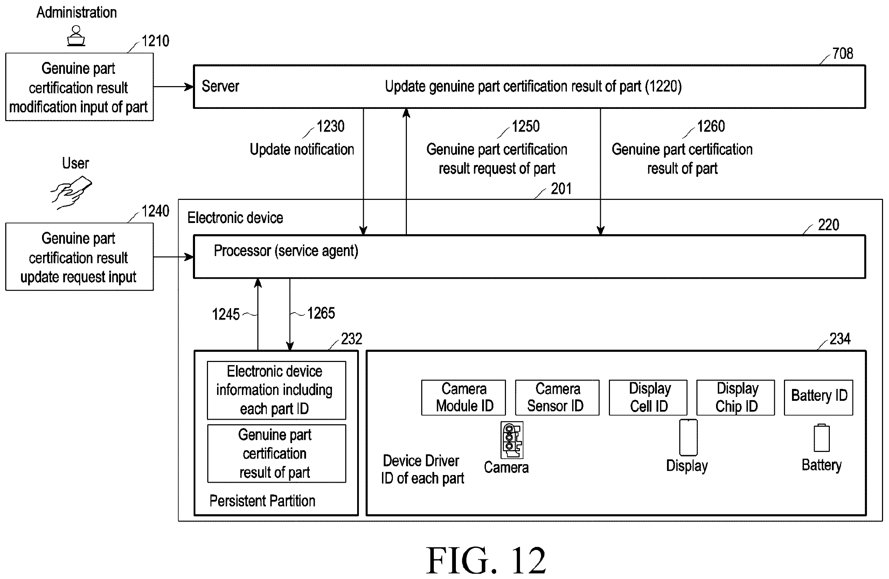

FIG. 12 is a view illustrating operations of a server and an electronic device when modifying a result of genuine part certification for each part according to an embodiment.

Referring to FIG. 12, the server 708 (e.g., the server 108 of FIG. 1) according to an embodiment is operable to receive a genuine part certification result modification input of the part (1210).

According to an embodiment, when the genuine part certification result of the part (e.g., authenticity information about the part) is modified (e.g., when the part is certified from unknown to genuine or when the part is not certified from genuine to unknown), the server 708 is operable to receive the modified genuine part certification result of the part (e.g., modified part authenticity information) from the administrator. For example, when the part is certified from unknown to genuine or when the part is not certified from genuine to unknown, the server 708 is operable to receive an input of modifying the genuine part certification result of the part from genuine to unknown or an input of modifying from unknown to genuine from the administrator (or user).

The server 708 according to an embodiment is operable to update the genuine part certification result of the part (1220). According to an embodiment, the server 708 is operable to modify the authenticity information about the part from unknown to genuine or update it from genuine to unknown according to reception of the modified genuine part certification result (e.g., modified part authenticity information) of the part.

The server 708 according to an embodiment is operable to inform the electronic device 201 of an update of the part genuine part certification result (1230). The server 708 according to an embodiment is operable to inform that the genuine part certification result (e.g., authenticity information) for at least one part among the parts included in the electronic device 201 is updated. The server 708 according to an embodiment is operable to transmit, to the electronic device 201, information indicating that at least one part is changed from genuine to unknown only when the genuine part certification result (e.g., authenticity information) for at least one part among the parts included in the electronic device 201 is changed from genuine to unknown.

The processor 220 (e.g., the processor 120 of FIG. 1) of the electronic device 201 (e.g., the electronic device 101 of FIG. 1) according to an embodiment is operable to display, on the display 260, information indicating an update of the genuine part certification result of the part when receiving the update of the genuine part certification result of the part. The electronic device 201 according to an embodiment is operable to display, on the display 260, the information indicating the update of the genuine part certification result of the part at the time of reception of the update of the genuine part certification result of the part or when there is a user input (or when a designated menu or icon is selected by the user). According to an embodiment, the electronic device 201 is operable to receive only information indicating that at least one part is changed from genuine to unknown from the server 708. The electronic device 201 is operable to display, on the display 260, an icon (e.g., refresh) indicating the reception of information indicating that at least one part is changed from genuine to unknown based thereon.

The processor 220 according to an embodiment is operable to receive a part genuine part certification result update request input of the user (1240). The processor 220 according to an embodiment is operable to identify the part genuine part certification result update request input based on a user input to the information indicating the update of the part genuine part certification result displayed on the display 260.

The processor 220 according to an embodiment is operable to read (1245) the electronic device information including each part ID stored in the persistent partition 232 based on the reception of the part genuine part certification result update request input from the user and transmit, to the server 708, the electronic device information including each part ID and the updated genuine part certification result request of the part (1250).

The server 708 according to an embodiment is operable to transmit the updated genuine part certification result of the part to the electronic device 201 (1260).

The processor 220 according to an embodiment is operable to update the part genuine part certification result and the electronic device information including each part ID stored in the persistent partition 232 based on the reception of the updated genuine part certification result of the part (1265).

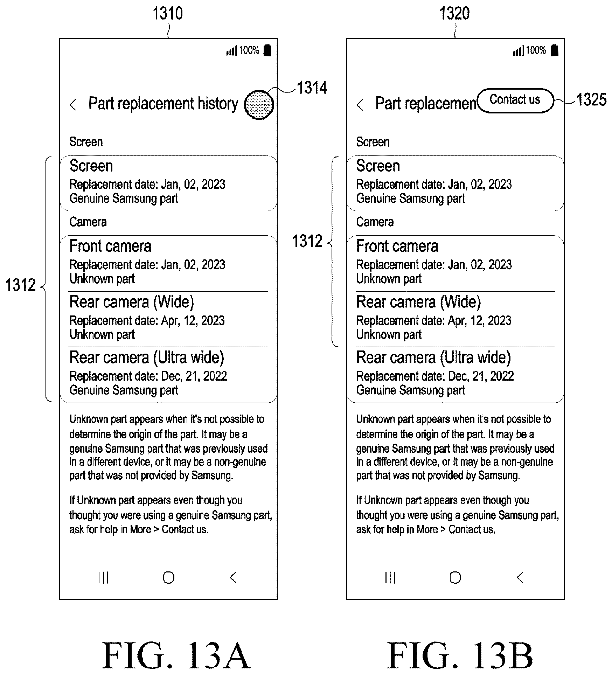

FIG. 13A is a view illustrating menu selection on a part replacement history screen according to an embodiment.

Referring to FIG. 13A, a processor (e.g., the processor 120 of FIG. 1 or the processor 220 of FIG. 2) of an electronic device (e.g., the electronic device 101 of FIG. 1 or the electronic device 201 of FIG. 2) is operable to display replacement history information 1312 about replaced parts on the part replacement history screen 1310 and display a graphic object (or icon) 1314 for menu selection associated with the part replacement history. The processor 220 according to an embodiment is operable to display the menu associated with the part replacement history as the icon 1314 for menu selection associated with the part replacement history is touched by the user.

FIG. 13B is a view illustrating an example of displaying 'contact us' as a menu associated with a part replacement history on a part replacement history screen according to an embodiment.

Referring to FIG. 13B, the processor 220 according to an embodiment is operable to display a 'contact us' 1325 as a menu associated with the part replacement history when there is no part where the updated genuine part certification result is received among the parts included in the electronic device 201. When a user input to the 'contact us' 1325 is received, the processor 220 according to an embodiment is operable to display a screen capable of sending a message or email or a call to the server 708 or the manager of the service provided from the server 708.

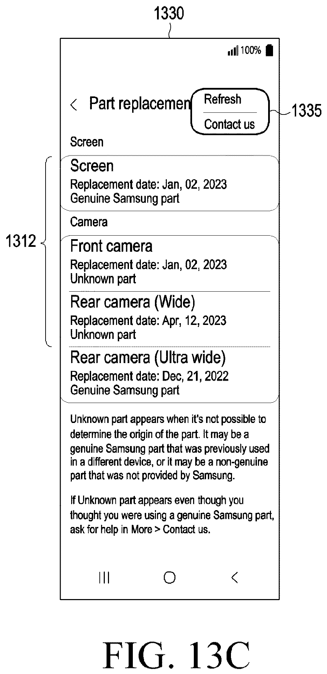

FIG. 13C is a view illustrating an example of displaying 'contact us' and 'refresh' as a menu associated with a part replacement history on a part replacement history screen according to an embodiment.

Referring to FIG. 13C, the processor 220 according to an embodiment is operable to display a 'contact us' and a 'refresh' 1335 as a menu associated with the part replacement history when there is a part where the updated genuine part certification result is received among the parts included in the electronic device 201. The 'refresh' according to an embodiment may be information indicating an update of the genuine part certification result of the part. The processor 220 according to an embodiment is operable to identify the part genuine part certification result update request input based on a user input to the 'refresh' displayed on the display 260. The processor 220 according to an embodiment is operable to transmit an updated genuine part certification result request of the part to the server 708 based on the genuine part certification result update request input of the part, receive the updated genuine part certification result of the part from the server 708, and update the electronic device information including each part ID stored in the persistent partition 232 and the genuine part certification result of the part.

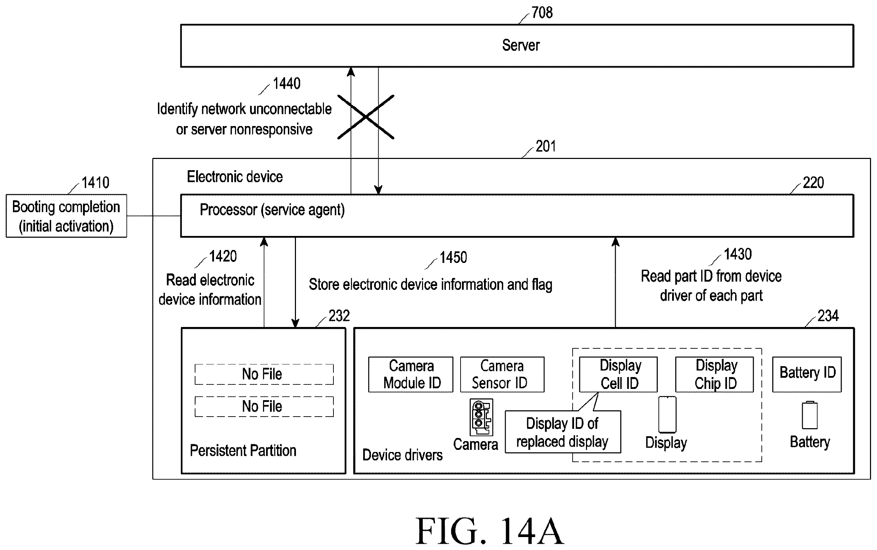

FIG. 14A is a view illustrating an operation of storing, in memory, electronic device information when network connection is impossible or no response is received from an external electronic device upon initial booting in an electronic device according to an embodiment.

Referring to FIG. 14A, the processor 220 of the electronic device 201 (e.g., the electronic device 101 of FIG. 1) according to an embodiment is operable to identify booting completion (1410).

The processor 220 according to an embodiment is operable to execute a service agent (e.g., a service agent application or a service agent program) based on the booting completion and read electronic device information stored in the persistent partition 232 of the memory 230 using the executed service agent (1420). When the information about the electronic device is not stored in the designated area of the memory 230, the processor 220 according to an embodiment is operable to identify booting by initial activation (initial booting).

The processor 220 according to an embodiment is operable to read the part ID from the device driver of each part when identifying booting completion by initial activation and obtain at least one piece of part identification information respectively corresponding to at least one part designated as replaceable (1430). The processor 220 according to an embodiment is operable to perform network connection to transmit (or transmit to register (e.g., for initial terminal registration)), to the server 708, electronic device information including the at least one piece of part identification information, electronic device identification information, and memory identification information.

When network connection is impossible or there is no response from the server 708, the processor 220 according to an embodiment is operable to identify it as network unconnectable or unresponsive from the server 708 (1440).

When network connection is impossible or there is no response from the server 708, the processor 220 according to an embodiment is operable to store the electronic device information and the flag in the designated area of the memory 230 (1450). For example, the flag may include a value indicating that the electronic device information is in a state of being not registered (or transmitted) in the server 708. For example, the flag may be included in the header portion of the data indicating the electronic device information.

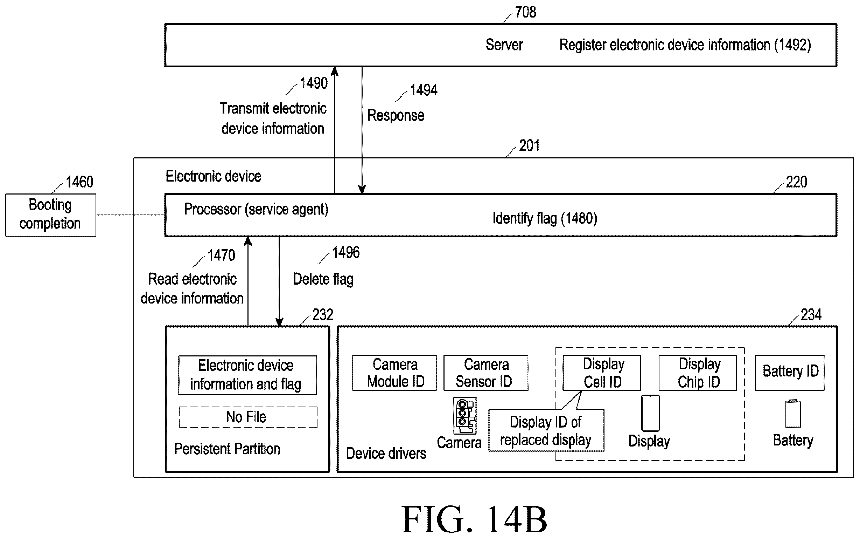

FIG. 14B is a view illustrating an operation of transmitting, to a server, electronic device information stored in memory when network connection is possible in an electronic device and reception of a response from an external electronic device is possible according to an embodiment.

Referring to FIG. 14B, the processor 220 of the electronic device 201 (e.g., the electronic device 101 of FIG. 1) according to an embodiment is operable to identify booting completion (1460).

The processor 220 according to an embodiment is operable to read the electronic device information from a designated persistent partition 232 of the memory 230 upon booting completion (1470).

When the electronic device information and the flag are stored in the designated area of the memory 230, the processor 220 according to an embodiment is operable to identify the flag (1480). For example, the processor 220 is operable to identify the flag included in the header of the data including the electronic device information.

The processor 220 according to an embodiment is operable to transmit the electronic device information corresponding to the flag to the server 708 (1490).

The server 708 according to an embodiment is operable to register the electronic device information using the at least one piece of part identification information, electronic device identification information, and memory identification information received from the electronic device 201 when the electronic device 201 is not a registered electronic device (1492). The server 708 according to an embodiment is operable to transmit a response indicating completion of registration of the electronic device information to the electronic device 201 (1494).

The processor 220 according to an embodiment is operable to delete the flag stored in the designated area of the memory 230 based on the reception of the response indicating the completion of registration of the electronic device information (1496).

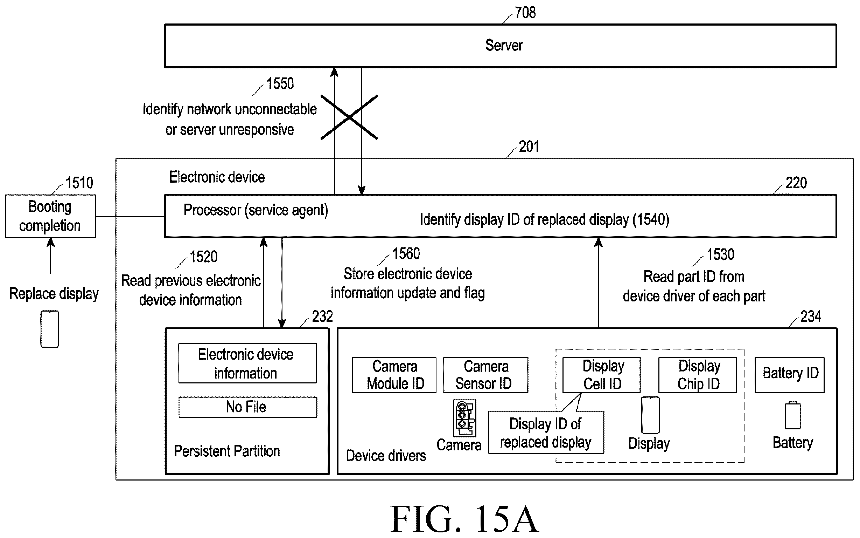

FIG. 15A is a view illustrating an operation of storing, in memory, electronic device information when network connection is impossible or no response is received from an external electronic device upon booting after part replacement in an electronic device according to an embodiment.

Referring to FIG. 15A, the processor 220 of the electronic device 201 (e.g., the electronic device 101 of FIG. 1) according to an embodiment is operable to perform booting based on booting after replacement of the display part and identify booting completion (1510).

The processor 220 according to an embodiment is operable to execute a service agent (e.g., a service agent application or a service agent program) based on the booting completion and read electronic device information (electronic device information stored before booting) stored in the persistent partition 232 of the memory 230 using the executed service agent (1520). The persistent partition 232 of the memory 230 is operable to store electronic device information (or information file of the electronic device) including the part ID of each of the parts (e.g., replaceable parts) included in the electronic device 201 before booting.

The processor 220 according to an embodiment is operable to read the part ID of each of the parts (e.g., replaceable parts) included in the electronic device 201 using the device drivers 234 after booting completion (1530). For example, the part ID of each of the parts included in the electronic device 201 may include a camera module ID, a camera sensor ID, a display cell ID, a display chip ID, and/or a battery ID and may further include other part IDs. Each part ID read from booting completion based on the display part replacement according to an embodiment may not be included in each part ID of the persistent partition 232 or may include another display ID.

The processor 220 according to an embodiment is operable to identify the display ID of the replaced display (1540). When the display ID read using the device driver after booting completion is not included in each part ID of the persistent partition 232 or another display ID is included, the processor 220 according to an embodiment is operable to identify that the display ID read using the device driver is the display ID of the replaced display. The processor 220 according to an embodiment is operable to perform network connection to transmit electronic device information (e.g., updated electronic device information) including the replaced display ID to the server 708. For example, the updated electronic device information may include part IDs including the replaced display ID instead of the previous display ID included in the electronic device 201, the electronic device ID, and the memory ID.

When network connection is impossible or there is no response from the server 708, the processor 220 according to an embodiment is operable to identify it as network unconnectable or unresponsive from the server 708 (1550).

When network connection is impossible or there is no response from the server 708, the processor 220 according to an embodiment is operable to store the electronic device information (e.g., updated electronic device information) including the replaced display ID and the flag in the designated area of the memory 230 (1560). For example, the flag may include a value indicating that the updated electronic device information is in a state of being not registered (or transmitted) in the server 708. For example, the flag may be included in the header portion of the data indicating the updated electronic device information.

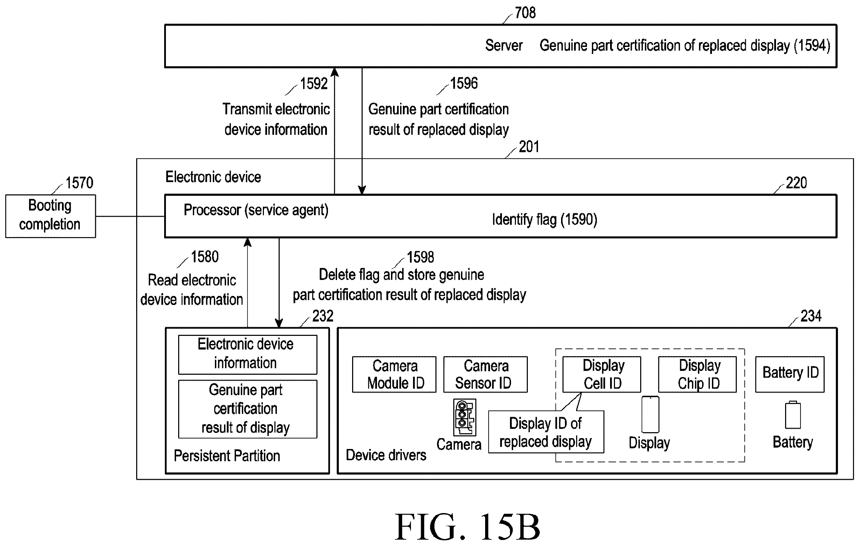

FIG. 15B is a view illustrating an operation of transmitting, to a server, updated electronic device information when network connection is possible in an electronic device and reception of a response from an external electronic device is possible according to an embodiment.

Referring to FIG. 15B, the processor 220 of the electronic device 201 (e.g., the electronic device 101 of FIG. 1) according to an embodiment is operable to identify booting completion (1570).

The processor 220 according to an embodiment is operable to read the electronic device information (e.g., updated electronic device information) including the replaced display ID from a designated persistent partition 232 of the memory 230 upon booting completion (1580).

The processor 220 according to an embodiment is operable to identify the flag stored together with the electronic device information including the replaced display ID in the designated area of the memory 230 (1590). For example, the processor 220 is operable to identify the flag included in the header of the data including the electronic device information including the replaced display ID.

The processor 220 according to an embodiment is operable to transmit the electronic device information including the replaced display ID to the server 708 based on flag identification (1592).

The server 708 according to an embodiment is operable to perform genuine part certification (or identify whether it is genuine) on the replaced display based on the reception of the electronic device information including the replaced display ID (1594). The server 708 according to an embodiment is operable to identify whether the replaced display is genuine based on whether the replaced display ID observes a predetermined display part numbering rule, whether there is a reproduction history corresponding to the replaced display ID, whether there is another electronic device equipment history corresponding to the replaced display ID, and/or whether, of reproduction and equipment in another electronic device of the replaced display, reproduction is the most recent. The server 708 according to an embodiment is operable to identify whether the replaced display is genuine by perform operations similar to the operations of FIG. 10.

The server 708 according to an embodiment is operable to transmit the result of genuine part certification of the replaced display (or authenticity information about the replaced display) to the electronic device 201 (1596).

The processor 232 according to an embodiment is operable to delete the flag stored together with the electronic device information including the replaced display ID in the persistent partition 232 and store, in the persistent partition 232, the result of genuine part certification of the replaced display (or authenticity information about the replaced display or file including the authenticity information about the replaced display) (1598).

Although an example in which the display part is replaced is described in connection with FIGS. 15A and 15B, other parts may further be replaced at different times in state in which network connection is impossible or there is no response from the server 708, and at each booting, at least replaced part may be identified, so that updated electronic device information including the replaced at least one part ID may be stored. As the electronic device 201 identifies a state of being network connectable or a response being receivable from the server 708 from the state in which network connection is impossible or there is no response from the server 708, the updated electronic device information stored in the memory may be transmitted to the server 708 in the order of storage.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding part from another, and does not limit the parts in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral part, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other parts under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

In a non-transitory storage medium storing instructions according to an embodiment, the instructions may be configured to, when executed by an electronic device (e.g., the electronic device 101 of FIG. 1 or the electronic device 201 of FIG. 2), enable the electronic device to perform at least one operation. The at least one operation may comprise obtaining part identification information about a part included in the electronic device based on completion of booting of the electronic device, identifying whether the part is a replaced part based on whether the part identification information is stored in a designated storage area of memory, based on identifying that the part is the replaced part, transmitting, through communication circuitry to an external electronic device, information about the electronic device including the part identification information, electronic device identification information about the electronic device, and memory identification information about the memory, receiving authenticity information about the part in response to the transmission of the information about the electronic device and storing the authenticity information about the part in the designated storage area, and based on a designated event, displaying, on a display, part replacement history information including the authenticity information about the part.

In a non-transitory storage medium storing instructions according to an embodiment, the instructions may be configured to, when executed by an electronic device (e.g., the server 108 of FIG. 1 or the server 708 of FIG. 7), enable the electronic device to perform at least one operation. The at least one operation may comprise receiving, through communication circuitry from an external electronic device, information about the external electronic device including part identification information about a part included in the external electronic device, external electronic device identification information about the external electronic device, and memory identification information about memory included in the external electronic device, identifying whether the part is genuine or unknown using the information about the external electronic device, and transmitting, through the communication circuitry to the external electronic device, the authenticity information about the part including information indicating that the part is genuine or information indicating that the part is unknown.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each part (e.g., a module or a program) of the above-described parts may include a single entity or multiple entities. Some of the plurality of entities may be separately disposed in different parts. According to various embodiments, one or more of the above-described parts may be omitted, or one or more other parts may be added. Alternatively or additionally, a plurality of parts (e.g., modules or programs) may be integrated into a single part. In such a case, according to various embodiments, the integrated part may still perform one or more functions of each of the plurality of parts in the same or similar manner as they are performed by a corresponding one of the plurality of parts before the integration. According to various embodiments, operations performed by the module, the program, or another part may be carried out sequentially, in parallel, repeatedly, or heuristically, or one or more of the operations may be executed in a different order or omitted, or one or more other operations may be added.

## Claims

1. An electronic device (101, 201) comprising,
communication circuitry (190, 290);
a display (160, 260);
memory (130, 230) storing instructions; and
at least one processor (120 or 220),
wherein the instructions, when executed by the at least one processor individually or collectively, enable the electronic device to:
obtain part identification information about a part included in the electronic device based on completion of booting of the electronic device;
identify whether the part is a replaced part based on whether the part identification information is stored in a designated storage area of the memory;
based on identifying that the part is the replaced part, transmit, through the communication circuitry to an external electronic device, information about the electronic device including the part identification information, electronic device identification information about the electronic device, and memory identification information about the memory;
receive authenticity information about the part in response to the transmission of the information about the electronic device and store the authenticity information about the part in the designated storage area of the memory; and
based on a designated event, display, on the display, part replacement history information including the authenticity information about the part.

2. The electronic device of claim 1, wherein the part replacement history information includes a name of the part, a replacement time of the part, and the authenticity information about the part.

3. The electronic device of claim 1 or 2, wherein the designated event includes a user input event for displaying the part replacement history information.

4. The electronic device of any one of claims 1 to 3, wherein the designated storage area of the memory is an area where deletion of data is impossible.

5. The electronic device of any one of claims 1 to 4, wherein the instructions, when executed by the at least one processor individually or collectively, enable the electronic device to:
obtain the part identification information about the part from a device driver corresponding to the part.

6. The electronic device of any one of claims 1 to 5, wherein the instructions, when executed by the at least one processor individually or collectively, enable the electronic device to:
based on the designated event, display, on the display, the part replacement history information including authenticity information corresponding to each of a plurality of parts.

7. An electronic device (708) comprising:
communication circuitry (710);
memory (730) storing instructions; and
at least one processor (720),
wherein the instructions, when executed by the at least one processor individually or collectively, enable the electronic device to:
receive, through the communication circuitry from an external electronic device, information about the external electronic device including part identification information about a part included in the external electronic device, external electronic device identification information, and memory identification information about memory included in the external electronic device;
identify whether the part is genuine or unknown using the information about the external electronic device; and
transmit, through the communication circuitry to the external electronic device, authenticity information about the part indicating whether the part is genuine or unknown.

8. The electronic device of claim 7, wherein the instructions, when executed by the at least one processor individually or collectively, enable the electronic device to:
identify whether the part is genuine or unknown based on at least one of whether a numbering rule of the part identification information is observed, a reproduction history corresponding to the part identification information, a mounting history of another device corresponding to the part identification information, or a recent history between the reproduction history and the mounting history.

9. The electronic device of claim 7 or 8, wherein the instructions, when executed by the at least one processor individually or collectively, enable the electronic device to:
identify a replacement of the memory of the external electronic device based on the memory identification information when receiving the information about the external electronic device; and
transmit, to the external electronic device, previously stored part authenticity information in response to another memory identification information before the replacement of the memory.

10. The electronic device of any one of claims 7 to 9, wherein the instructions, when executed by the at least one processor individually or collectively, enable the electronic device to:
update the authenticity information about the part based on an input corresponding to a modification of the authenticity information about the part; and
transmit, to the external electronic device, the updated authenticity information about the part.

11. A method for providing replacement history information about a part in an electronic device (101, 201), the method comprising:
obtaining part identification information about a part included in the electronic device based on completion of booting of the electronic device;
identifying whether the part is a replaced part based on whether the part identification information is stored in a designated storage area of memory;
based on identifying that the part is the replaced part, transmitting, through communication circuitry to an external electronic device, information about the electronic device including the part identification information, electronic device identification information about the electronic device, and memory identification information about the memory;
receiving authenticity information about the part from the external electronic device in response to the transmission of the electronic device and storing the authenticity information about the part in the designated storage area; and
based on a designated event, displaying, on a display, part replacement history information including the authenticity information about the part.

12. The method of claim 11, wherein the part replacement history information includes a name of the part, a replacement time of the part, and the authenticity information about the part.

13. The method of claim 11 or 12, wherein the designated event includes a user input event for displaying the part replacement history information.

14. A method for providing authenticity information about a part in an electronic device (708), the method comprising:
receiving, through communication circuitry from an external electronic device, information about the external electronic device including part identification information about a part included in the external electronic device, external electronic device identification information about the external electronic device, and memory identification information about memory included in the external electronic device;
identifying whether the part is genuine or unknown based on at least one of whether a numbering rule of the part identification information is observed, a reproduction history corresponding to the part identification information, a mounting history of another device corresponding to the part identification information, or a recent history between the reproduction history and the mounting history; and
transmitting, through the communication circuitry to the external electronic device, the authenticity information about the part including information indicating that the part is genuine or information indicating that the part is unknown.

15. A non-transitory storage medium storing instructions, the instructions, when executed by an electronic device (e.g., the server 108 of FIG. 1 or the server 708 of FIG. 7), cause the electronic device to perform at least one operation, wherein the at least one operation comprise:
receiving, through communication circuitry from an external electronic device, information about the external electronic device including part identification information about a part included in the external electronic device, external electronic device identification information about the external electronic device, and memory identification information about memory included in the external electronic device,
identifying whether the part is genuine or unknown using the information about the external electronic device, and
transmitting, through the communication circuitry to the external electronic device, the authenticity information about the part including information indicating that the part is genuine or information indicating that the part is unknown.
